# EUROPEAN PATENT APPLICATION

(11) **EP 4 668 995 A1**
(43) Date of publication of application: **24.12.2025**
(21) Application number: 23941007.9
(22) Date of filing: 13.06.2023
(51) Int. Cl.: H04W 72/512

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LU, Liuming, Dongguan, Guangdong 523860 (CN); GAO, Ning, Dongguan, Guangdong 523860 (CN); LI, Yapu, Dongguan, Guangdong 523860 (CN)
(74) Representative: Mewburn Ellis LLP
(86) International application number: PCT/CN2023/100041
(87) International publication number: WO 2024/254769

(57) **Abstract**

A method and device for wireless communication are provided. A first STA reserves m₁ frequency domain units in a first uplink transmission, and one or more other STAs having pending uplink low-latency traffic report buffer information of low-latency traffic on the m₁ frequency domain units. Thereby, an AP can acquire the buffer information of the uplink low-latency traffic of the one or more other STAs in a contended TXOP of the first STA or a contended TXOP of the AP, thereby enabling timely transmission of event-driven uplink low-latency traffic. The method for wireless communication includes the following. The first STA reserves m₁ frequency domain units in the first uplink transmission, the m1 frequency domain units are used for one or more other STAs having pending uplink low-latency traffic to report buffer information of low-latency traffic, and m₁ is a positive integer.

## Description

### TECHNICAL FIELD

This disclosure relates to the field of communication, and more specifically, to a method and device for wireless communication.

### BACKGROUND

In wireless local area networks (WLAN), for event-driven latency-sensitive traffic (also known as low-latency traffic), its unpredictability makes it impossible to transmit through pre-scheduled resources. How to improve the transmission performance of latency-sensitive traffic is a problem that needs to be solved.

### SUMMARY

The disclosure provides a method and device for wireless communication. A first STA reserves m₁ frequency-domain units in a first uplink transmission. One or more other STAs with pending uplink low-latency traffic report the buffer information of low-latency traffic on the m₁ frequency-domain units. Thus, access point (AP) can obtain the buffer information of uplink low-latency traffic of one or more other STAs in a contended transmission opportunity (TXOP) of the first STA or a contended TXOP of the AP, thereby enabling the timely transmission of event-driven uplink low-latency traffic.

In a first aspect, a method for wireless communication is provided, which includes: a first STA reserves m₁ frequency-domain units in a first uplink transmission, where the m₁ frequency-domain units are used by one or more other STAs with pending uplink low-latency traffic to report buffer information of low-latency traffic, and m₁ is a positive integer.

In a second aspect, a method for wireless communication is provided, which includes: a second STA reports buffer information of low-latency traffic on m₁ frequency-domain units, where the m₁ frequency-domain units are frequency-domain units reserved by a first STA in a first uplink transmission, and m₁) is a positive integer.

In a third aspect, a method for wireless communication is provided, which includes: an AP receives a first uplink transmission from a first STA; where the first STA has reserved m₁ frequency-domain units in the first uplink transmission, the m₁ frequency-domain units are used by one or more other STAs with pending uplink low-latency traffic to report buffer information of low-latency traffic, and m₁ is a positive integer.

In a fourth aspect, a STA is provided. The STA is a first STA, and is configured to perform the method in the first aspect. The STA includes functional modules for performing the method in the first aspect.

In a fifth aspect, a STA is provided. The STA is a second STA, and is configured to perform the method in the second aspect. The STA includes functional modules for performing the method in the second aspect.

In a sixth aspect, an AP is provided. The AP is configured to perform the method in the third aspect. The AP includes functional modules for performing the method in the third aspect.

In a seventh aspect, a STA is provided. The STA is the first STA, including a processor and a memory. The memory is configured to store computer programs, and the processor is configured to invoke and run the computer programs stored in the memory, to make the STA perform the method in the first aspect.

In an eighth aspect, a STA is provided. The STA is the second STA, including a processor and a memory. The memory is configured to store computer programs, and the processor is configured to invoke and run the computer programs stored in the memory, to make the STA perform the method in the second aspect.

In a ninth aspect, an AP is provided. The AP includes a processor and a memory. The memory is configured to store computer programs, and the processor is configured to invoke and run the computer programs stored in the memory, to make the AP perform the method in the third aspect.

In a tenth aspect, a device for implementing the method in any one of the first to third aspects is provided. The device includes a processor to invoke and run computer programs from a memory, to make an apparatus equipped with the device perform the method in any one of the first to third aspects.

In an eleventh aspect, a computer-readable storage medium for storing computer programs is provided. The computer programs cause a computer to perform the method in any one of the first to third aspects when executed.

In a twelfth aspect, a computer program product is provided. The computer program product includes computer program instructions, which cause a computer to perform the method in any one of the first to third aspects when executed.

In a thirteenth aspect, a computer program is provided, which causes a computer to perform the method in any one of the first to third aspects when executed on the computer.

Through the above technical solutions, the first STA reserves m₁ frequency-domain units in the first uplink transmission, and one or more other STAs with pending uplink latency-sensitive traffic report the buffer information of low-latency traffic on the m₁ frequency-domain units. Thus, the AP can obtain the buffer information of low-latency traffic of one or more other STAs in the contended TXOP of the first STA or the contended TXOP of the AP, thereby enabling the timely transmission of event-driven uplink low-latency traffic.

### BRIEF DESCRIPTION OF THE DRAWINGS

FIG.1 is a schematic diagram of a communication system architecture according to an embodiment of the disclosure.
FIG.2 is a schematic diagram of subchannel puncturing provided in the disclosure.
FIG.3 is a schematic diagram of a buffer status report polling (BSRP) trigger frame provided in the disclosure.
FIG.4 is a schematic diagram of a quantity of service (QoS) Null frame provided in the disclosure.
FIG. 5 is a schematic diagram of a null data physical protocol data unit feedback report polling (NFRP) trigger frame provided in the disclosure.

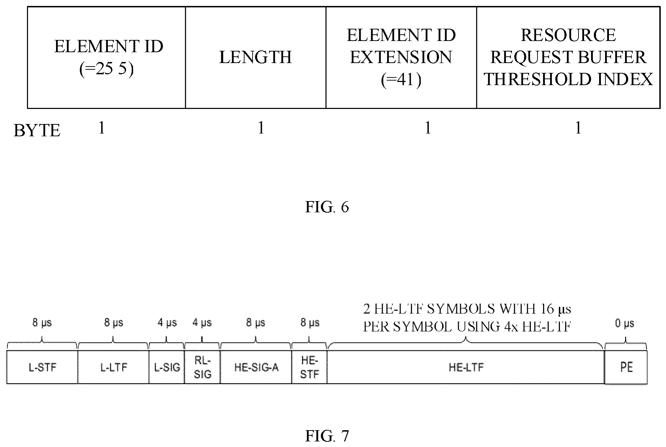

FIG.6 is a schematic diagram of a null data physical protocol data unit (NDP) feedback report parameter set element provided in the disclosure.
FIG.7 is a schematic diagram of an HE TB feedback NDP format provided in the disclosure.
FIG.8 is a schematic flowchart of a method for wireless communication according to an embodiment of the disclosure.
FIG.9 to 15 are schematic diagrams of a first trigger frame according to an embodiment of the disclosure.
FIG.16 is a schematic diagram of a BlockAck (BA) frame carrying a transmission opportunity (TXOP) preemption indication according to an embodiment of the disclosure.
FIG.17 to 22 are schematic diagrams of a second trigger frame according to an embodiment of the disclosure.
FIG.23 is a schematic diagram of an NDP according to an embodiment of the disclosure.
FIG.24 to 33 are schematic diagrams of uplink transmission and reserved frequency-domain units according to an embodiment of the disclosure.
FIG.34 is a schematic block diagram of a station (STA) according to an embodiment of the disclosure.
FIG.35 is another schematic block diagram of a STA according to an embodiment of the disclosure.
FIG.36 is a schematic block diagram of an access point (AP) according to an embodiment of the disclosure.
FIG.37 is a schematic block diagram of a communication device according to an embodiment of the disclosure.
FIG.38 is a schematic block diagram of an apparatus according to an embodiment of the disclosure.
FIG.39 is a schematic block diagram of a communication system according to an embodiment of the disclosure.

### DETAILED DESCRIPTION

Technical solutions of embodiments of the disclosure will be described below in conjunction with the accompanying drawings in these embodiments. It should be understood that the described embodiments represent only a portion of the embodiments of the disclosure, rather than all possible embodiments. All other embodiments obtained by those of ordinary skill in the art based on the embodiments herein without creative efforts shall fall within the protection scope of the disclosure.

The technical solution of the disclosure can be applied to various communication systems, such as wireless local area networks (WLAN), wireless fidelity (Wi-Fi), or other communication systems.

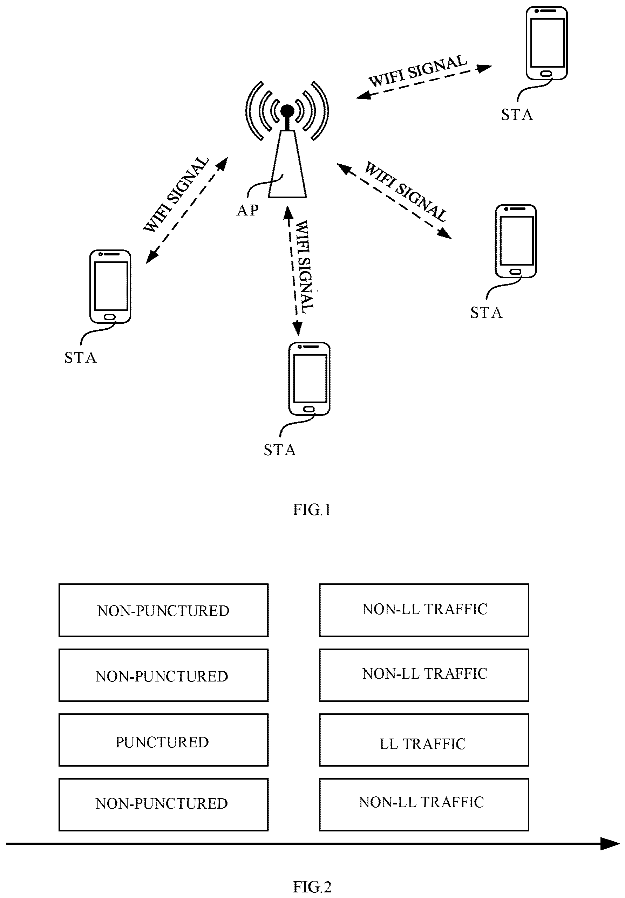

Please refer to FIG.1, which illustrates a schematic diagram of a wireless communication system according to an embodiment of the disclosure. As illustrated in FIG.1, the wireless communication system can include: an access point (AP) and a station (STA).

In some scenarios, the AP can also be referred to as an AP STA, that is, in a certain sense, the AP is also a kind of STA. In some scenarios, the STA can also be referred to as a non-AP STA.

In some embodiments, the STA can include AP STAs and non-AP STAs. Communication in the communication system can be between the AP and the non-AP STA, between the non-AP STA and the non-AP STA, or between the STA and the peer STA. The peer STA can refer to the device communicating with the STA on the opposite end. For example, the peer STA may be an AP or a non-AP STA.

The AP is equivalent to a bridge connecting the wired network and the wireless network, and its main function is to connect various wireless network clients together and then access the wireless network to the Ethernet. The AP device can be a terminal device with a Wi-Fi chip (such as a mobile phone) or a network device (such as a router).

It should be understood that the role of the STA in the communication system is not absolute. For example, in some scenarios, when a mobile phone is connected to a router, the mobile phone is a non-AP STA. When the mobile phone acts as a hotspot for other mobile phones, the mobile phone plays the role of an AP.

The AP and non-AP STA can be devices used in vehicular networking, internet of things (IoT) nodes, sensors in the IoT, smart cameras, smart remote controls, smart water meters, and smart electricity meters in smart homes, etc., as well as sensors in smart cities.

In some embodiments, the non-AP STA can support the 802.11be standard. The non-AP STA can also support a variety of current and future WLAN standards of the 802.11 family, including 802.11ax, 802.11ac, 802.11n, 802.11g, 802.11b, and 802.11a.

In some embodiments, the AP can be a device that supports the 802.11be standard. The AP can also be a device that supports a variety of current and future WLAN standards of the 802.11 family, including 802.11ax,802.11ac,802.11n,802.11g,802.11b, and 802.11a.

In the embodiments of the disclosure, the STA can be a mobile phone supporting WLAN/ Wi-Fi technology, a tablet (Pad), a computer, a virtual reality (VR) device, an augmented reality (AR) device, a wireless device in industrial control, a set-top box, a wireless device in self-driving, a vehicle communication device, a wireless device in remote medical, a wireless device in smart grid, a wireless device in transportation safety, a wireless device in smart city, a wireless device in smart home, a wireless communication chip, an application-specific integrated circuit (ASIC), a system on chip (SOC), etc.

The WLAN technology can support frequency bands including, but not limited to: low-frequency bands (2.4GHz, 5GHz, 6GHz), high-frequency bands (45GHz, 60GHz).

There are one or more links between the STA and the AP. In some embodiments, the STA and the AP support multi-band communication. For example, communication can be carried out simultaneously on the 2.4GHz, 5GHz, 6GHz, 45GHz, and 60GHz frequency bands, or on different channels of the same frequency band (or different frequency bands) to improve the communication throughput and/or reliability between devices. Such devices are commonly referred to as multi-band devices, or multi-link devices (MLD), and are sometimes also called multi-link entities or multi-band entities. The multi-link device can be an AP device or an STA device. If the multi-link device is an AP device, it includes one or more APs; if the multi-link device is an STA device, it includes one or more non-AP STAs.

A multi-link device including one or more APs can be referred to as an access point multi-link device (AP MLD), and a multi-link device including one or more non-AP STAs can be referred to as a non-access point multi-link device (non-AP MLD).

In the embodiments of the disclosure, the AP can include multiple APs, and the non-AP can include multiple STAs. Multiple links can be formed between the APs in the AP and the STAs in the non-AP, and data communication can be carried out between the APs in the AP and corresponding STAs in the non-AP through the corresponding links.

The AP is a device deployed in a wireless local area network to provide wireless communication functions for STAs. The station can include: user equipment (UE), access terminal, user unit, user station, mobile station, mobile terminal, remote station, remote terminal, mobile device, wireless communication device, user agent, or user device. Optionally, the station can also be a cellular phone, cordless phone, session initiation protocol (SIP) phone, wireless local loop (WLL) station, personal digital assistant (PDA), handheld device with wireless communication function, computing device, or other processing device connected to a wireless modem, vehicle-mounted device, wearable device, and the like, and the disclosure is not limited to these.

Optionally, both the STA and the AP support the IEEE 802.11 standard.

It should be understood that the terms "system" and "network" are often used interchangeably in this text. The term "and/or" is merely a description of the relationship between associated objects, indicating that there can be three relationships, for example, A and/or B can represent: the existence of A alone, the simultaneous existence of A and B, or the existence of B alone. In addition, the character "/" in this text generally indicates that the relationship between the associated objects is an "or" relationship.

It should be understood that the "indication" mentioned in the embodiments of the disclosure can be a direct indication, an indirect indication, or an indication of an association. For example, A indicates B, which can mean that A directly indicates B, such as B can be obtained through A; it can also mean that A indirectly indicates B, such as A indicates C, and B can be obtained through C; it can also mean that there is an association between A and B.

The terminology used in the implementation modes of the disclosure is only used to explain the specific embodiments of the disclosure and is not intended to limit the disclosure. The terms "first," "second," "third," "fourth," etc., in the description, claims, and accompanying drawings of the disclosure are used to distinguish different objects and are not used to describe a specific order. In addition, the terms "include" and "have," as well as any of their variations, are intended to cover non-exclusive inclusion.

It should be understood that "at least one" mentioned in the embodiments of the disclosure can represent "one or more". The "positive integer" mentioned in the embodiments of the disclosure can represent values such as 1,2,3..., the "non-negative integer" mentioned can represent values such as 0,1,2,3...and the "integer" mentioned can represent values such as..., - 3, -2, -1, 0, 1, 2, 3, ..., which can be replaced with any possible values based on the needs of the embodiment.

It should be understood that the figures and/or tables given in the embodiments of the disclosure are merely examples. Specifically, in some cases, some of the information contained in the figures and/or tables given in the embodiments of the disclosure can constitute optional embodiments on their own. For example, each row or column in a table can constitute an optional embodiment, and the disclosure does not limit this.

In the description of the embodiments of the disclosure, the term "corresponding" can indicate a direct or indirect correspondence between two entities, or an association between them, or a relationship of indication and being indicated, configuration and being configured, etc.

In the embodiments of the disclosure, "predefined" or "preconfigured" can be implemented by pre-storing corresponding codes, tables, or other means that can indicate relevant information in the device (for example, including STA and network devices). The disclosure does not limit the specific implementation method. For example, predefined can refer to definitions in the protocol.

In the embodiments of the disclosure, the "protocol" can refer to standard protocols in the field of communication, which can include Wi-Fi protocols and related protocols applied in future Wi-Fi communication systems, and the disclosure does not limit this.

To better understand the embodiments of the disclosure, the resources reserved for low-latency transmission in the disclosure are explained.

A method similar to preamble puncturing can be applied to reserve resources for low-latency (LL) transmission. To handle low-latency traffic in a way that does not cause conflicts or interference and does not require waiting for the transmission opportunity (TXOP) of another station, a specific scheduling method can be adopted: allocating resources under specific conditions and indicating the resource allocation information. The AP can indicate in its operating bandwidth whether its sub-channels are punctured or non-punctured. Scheduling low-latency traffic to be transmitted on punctured channels is one possible approach, that is, using the determined punctured channels for event-driven low-latency (LL) traffic can avoid conflicts with the ongoing non-low-latency (non-LL) traffic.

To better understand the embodiments of the disclosure, the uplink orthogonal frequency division multiple access-based random access (UORA) mechanism related to the disclosure is explained.

The AP shall indicate the range of the orthogonal frequency division multiple access (OFDMA) contention window (OCW) in the UORA parameter set element for non-AP STA to initiate random access following the trigger frame transmission.

A non-AP high efficiency STA (Non-AP HE STA) shall maintain an internal OCW and an internal OFDMA random access backoff (OBO) counter. The OCW is an integer in the range of OCWₘᵢₙ to OCWₘₐₓ.

The size of all random access resource units (RA-RUs) in the set shall be the same and equal to the size of the RA-RU indicated by the RU Allocation subfield in the User Information filed (User Info field). A non-AP HE STA shall determine the total number of eligible RA-RUs in a contiguous set from the Number Of RA-RU subfields (see Table (RA-RU Information subfield format)) in the User Info field corresponding to an eligible RA-RU, excluding RA-RUs that are not within its operating bandwidth.

If an HE STA has a pending frame for the AP upon the reception of a trigger frame containing at least one eligible RA-RU and if the OBO counter of an HE STA is not greater than the number of eligible RA-RUs in a trigger frame from that AP, then the HE STA shall set its OBO counter to zero and randomly select one of the eligible RA-RUs to be considered for transmission. Otherwise, the HE STA decrements its OBO counter by the number of eligible RA-RUs in the Trigger frame.

For HE STA or HE AP, the maximum number of RU types and quantities available under each bandwidth is given in Table 1 below.

| RU type | CBW20 | CBW40 | CBW80 | CBW80+80 and CBW160 |
|---|---|---|---|---|
| 26-tone RU | 9 | 18 | 37 | 74 |
| 52-tone RU | 4 | 8 | 16 | 32 |
| 106-tone RU | 2 | 4 | 8 | 16 |
| 242-tone RU | 1 | 2 | 4 | 8 |
| 484-tone RU | N/A | 1 | 2 | 4 |
| 996-tone RU | N/A | N/A | 1 | 2 |
| 2×996 tone RU | N/A | N/A | N/A | 1 |

For extremely high throughput (EHT) STA or EHT AP, the maximum number of RU types and quantities available under each bandwidth is given in Table 2 below. The tone plan of EHT under 80MHz is different from that of HE.

| RU type | CBW20 | CBW40 | CBW80 | CBW80+80 and CBW160 | CBW320 |
|---|---|---|---|---|---|
| 26-tone RU | 9 | 18 | 36 | 72 | 148 |
| 52-tone RU | 4 | 8 | 16 | 32 | 64 |
| 106-tone RU | 2 | 4 | 8 | 16 | 32 |
| 242-tone RU | 1 | 2 | 4 | 8 | 16 |
| 484-tone RU | N/A | 1 | 2 | 4 | 8 |
| 996-tone RU | N/A | N/A | 1 | 2 | 3 |
| 2×996 tone RU | N/A | N/A | N/A | 1 | 2 |
| 4×996 tone RU | N/A | N/A | N/A | N/A | 1 |

It should be noted that the tone in the above Table 1 and Table 2 can also be called a subcarrier, which is interchangeable.

To better understand the embodiments of the disclosure, the buffer status report (BSR) related to the disclosure is explained.

The AP sends a BSR polling (BSRP) trigger frame to obtain the BSR of multiple STAs (non-AP STAs). In the Quality Of Service (Qos) Control field (Control) of at least one frame (e.g., a QoS Null frame) contained in a physical layer protocol data unit (PPDU) as a response, the STA indicates the queue size of the buffer corresponding to at least one traffic identifier (TID), in the BSR Control subfield of an Aggregate Control (A-Control) subfield of a high-efficiency (HE) variant of a High Throughput (HT) Control field (Control) in at least one QoS Null frame, the STA also indicates the queue size of the buffer corresponding to at least one access category (AC).

Specifically, for example, the BSRP trigger frame can be illustrated in FIG.2. The Common Information field of the BSRP trigger frame includes the following fields: Trigger Frame Type (=4)(4 bits), UL Length (12 bits), More trigger frames (TF) (1 bit), Channel Sounding (CS) Required (1 bit), UL Bandwidth (2 bits), Guard Interval (GI) And High Efficiency Long Training field (HE-LTF) Type/Triggered TXOP Sharing Mode (2 bits), Number Of HE-LTF Symbols And Midamble Periodicity (3 bits), Low-Density Parity Check (LDPC) Extra Symbol Segment (1 bit), AP TX Power (6 bits), Pre-Forward Error Correction (Pre-FEC) Padding Factor (2 bits), Packet Extension (PE) Disambiguity (1 bit), UL Spatial Reuse (16 bits), HE/EHT Primary 160 (P160)(1 bit), Special User Info Field Flag (1 bit), and EHT Reserved (7 bits).

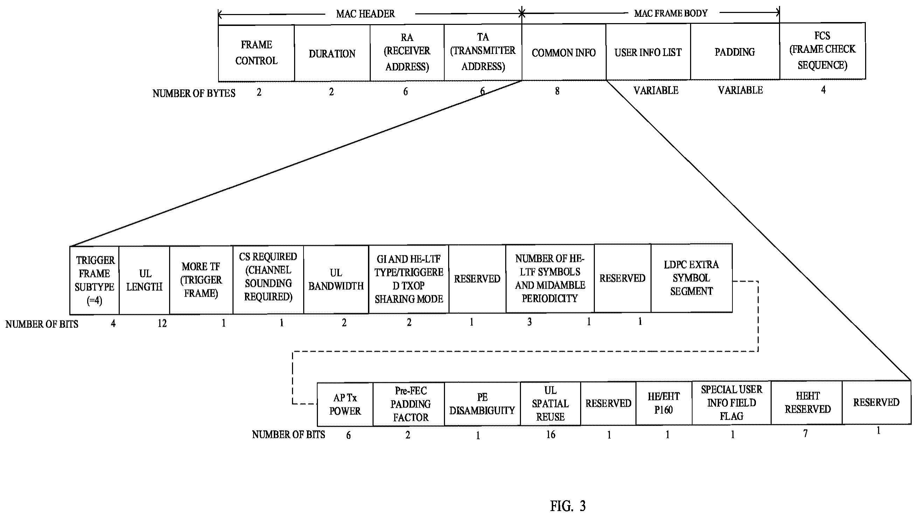

Specifically, for example, the QoS Null frame is illustrated in FIG.3. The MAC header of the QoS Null frame includes a QoS Control field and a HT Control field. The QoS Control field includes the following fields: Traffic Identifier (TID)(4 Bits), End Of Service Period (EOSP)(=1)(1 Bit), ACK Policy Indicator (2 Bits), And Queue Size (8 Bits). The HT Control field includes the following fields: Very High Throughput (VHT)(1 Bit), HE (1 Bit), And Aggregate Control (30 bits). A Control List field in the Aggregate Control field includes a Control Information (BSR Control) field, which includes the following fields: Access Category Index (ACI) Bitmap, Delta TID, ACI High, Scaling Factor, Queue Size High, And Queue Size All.

To better understand the embodiments of the disclosure, the null data physical protocol data unit feedback report (NFR) related to the disclosure is explained.

The access point sends a null data physical protocol data unit feedback report polling (NFRP) trigger frame to obtain the feedback of the null data physical protocol data unit (null data PPDU, NDP) from multiple stations. After receiving the NFRP trigger frame, the station transmits the NDP (or the high efficiency trigger based feedback null data physical protocol data unit (HE TB feedback NDP)) as a response. When the number of bytes of the data buffered by the station is greater than or equal to the resource request buffer threshold indicated by the access point, the feedback status (FEEDBACK_STATUS) of the station (this transmission variable will be used to modulate the subcarriers of the LTF of the NDP) is set to 1; otherwise, the FEEDBACK_STATUS of the station is set to 0. The resource request buffer threshold is indicated in an NDP feedback report parameter set element in a beacon frame and/or probe response frame and/or association response frame and/or re-association response frame sent by the access point previously, or the resource request buffer threshold is set to a default value of 256 bytes if this indication is not received.

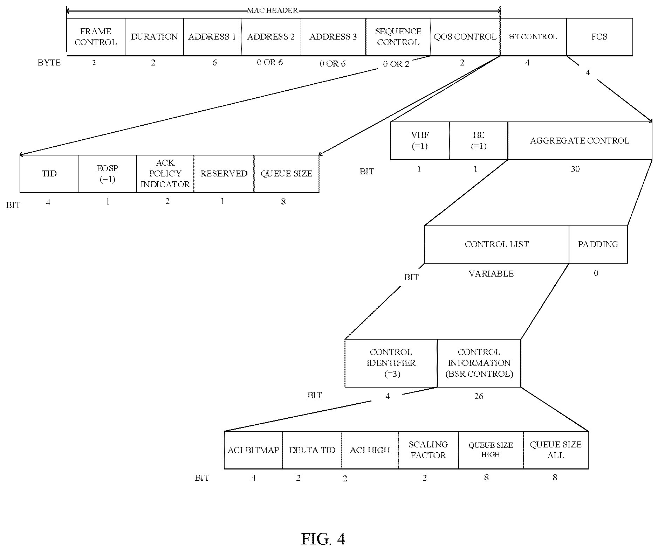

Specifically, the NFRP trigger frame is illustrated in FIG.4. The Common Information field includes the following fields: Trigger Frame Type (=4)(4 Bits), UL Length (12 Bits), More Trigger Frame (TF) (1 Bit), CS Required (1 Bit), UL Bandwidth (2 Bits), GI And HE-LTF Type (=2)(2 Bits), Multiple User Multiple-In Multiple-Out (MU-MIMO) HE-LTF Mode (1 Bit), Number Of HE-LTF Symbols And Midamble Periodicity (=1)(3 Bits), AP Tx Power (6 Bits), And Uplink High Efficiency-Signal Field-A2 (HE-SIG-A2) Reserved (9 bits). The User Info List field includes the following fields: Association Identifier (AID), Feedback Type, UL Target Receive Power, and Number Of Spatially Multiplexed Users.

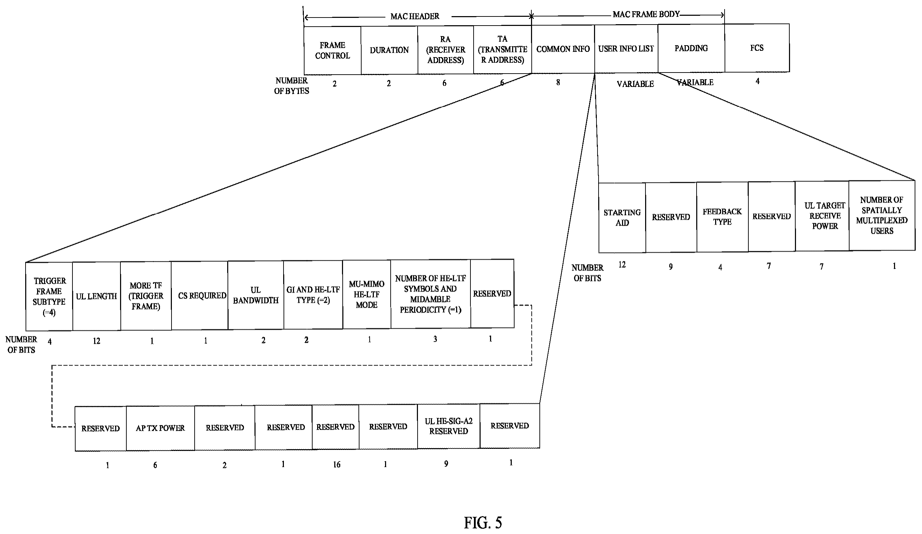

Specifically, the NDP feedback report parameter set element is illustrated in FIG.5.

Specifically, the HE TB feedback NDP includes the following fields: Legacy Short Training field (L-STF), Legacy Long Training field (L-LTF), Legacy Signal (L-SIG), Repeat Legacy Signal (RL-SIG), High Efficiency Signal A (HE-SIG-A), High Efficiency Short Training field (HE-STF), High Efficiency Long Training field (HE-LTF), and Packet Extension (PE).

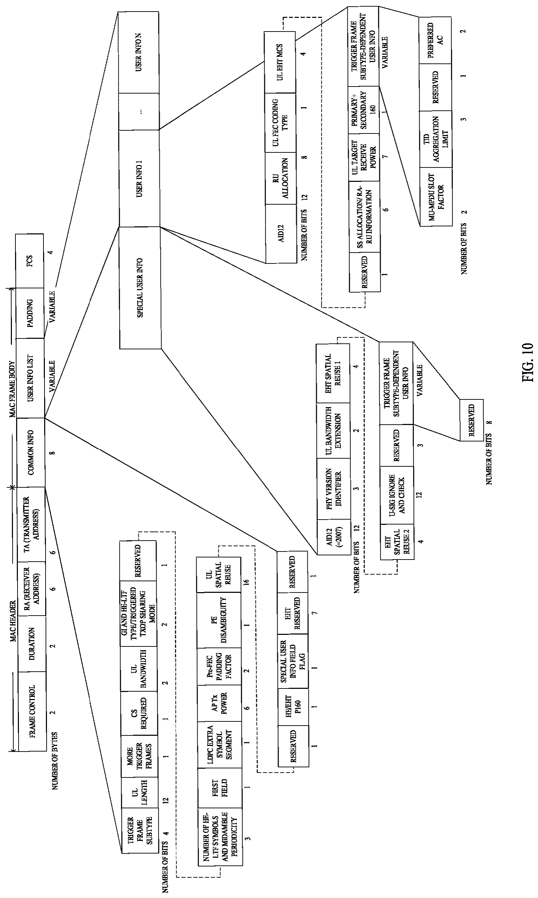

As illustrated in FIG. 10, there are 2 HE-LTF symbols of 4x HE-LTF type, with each symbol lasting 16 µs (2 HE-LTF symbols with 16 µs per symbol using 4x HE-LTF).

Specifically, the NDP format adopts the HE TB PPDU format, except that there is no Data field. The duration of the PE field is 0 microseconds (µs), and there are 2 symbols of 4x HE-LTF type. The GI used is 3.2 microseconds. The duration of a 1x HE-LTF symbol is 3.2 microseconds, the duration of a 2x HE-LTF symbol is 6.4 microseconds, and the duration of a 4x HE-LTF symbol is 12.8 microseconds, none of which include the duration of the GI.

Specifically, different RU tone set indexes (RU_TONE_SET_INDEX) in the HE-LTF field are used to identify the AID and feedback information (FEEDBACK_STATUS) of different non-AP STAs. The tone can also be called a subcarrier. Specifically, the HE-LTF subcarrier mapping relationship in the HE TB feedback NDP is illustrated in Table 3.

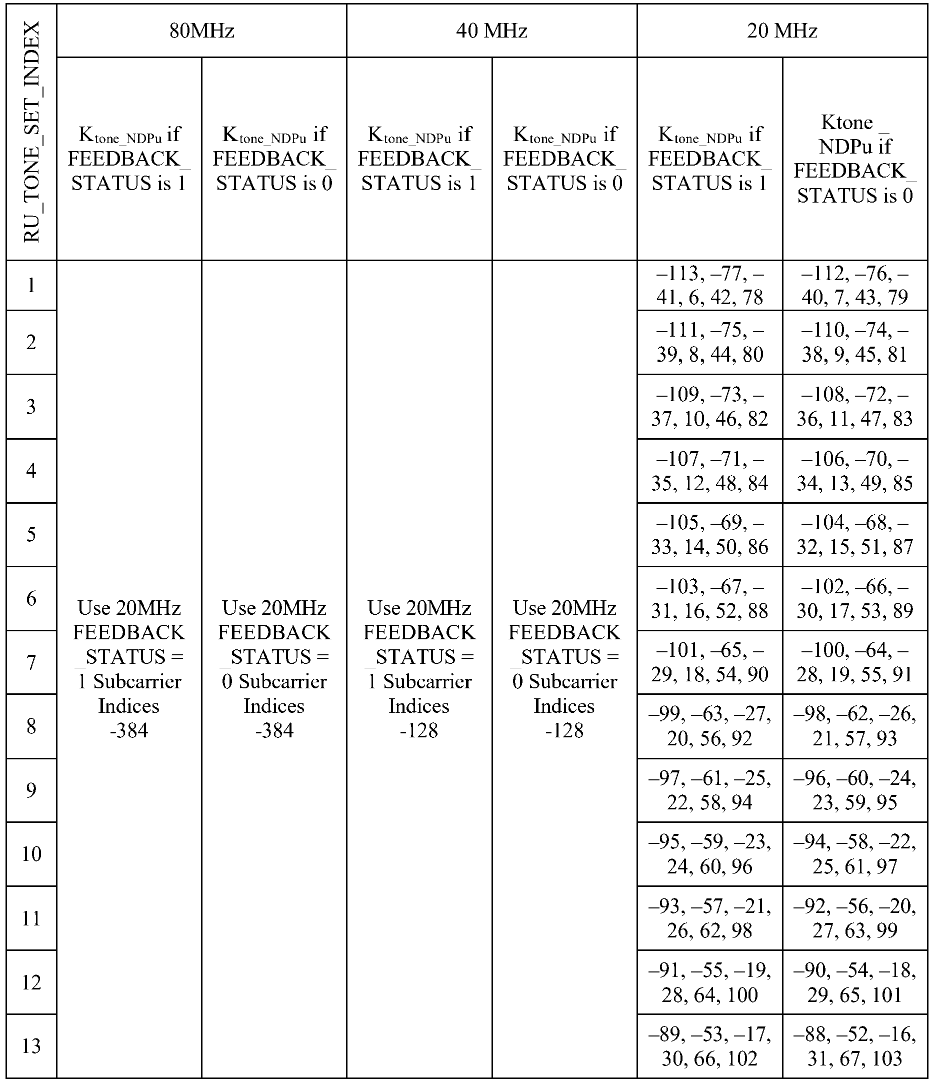

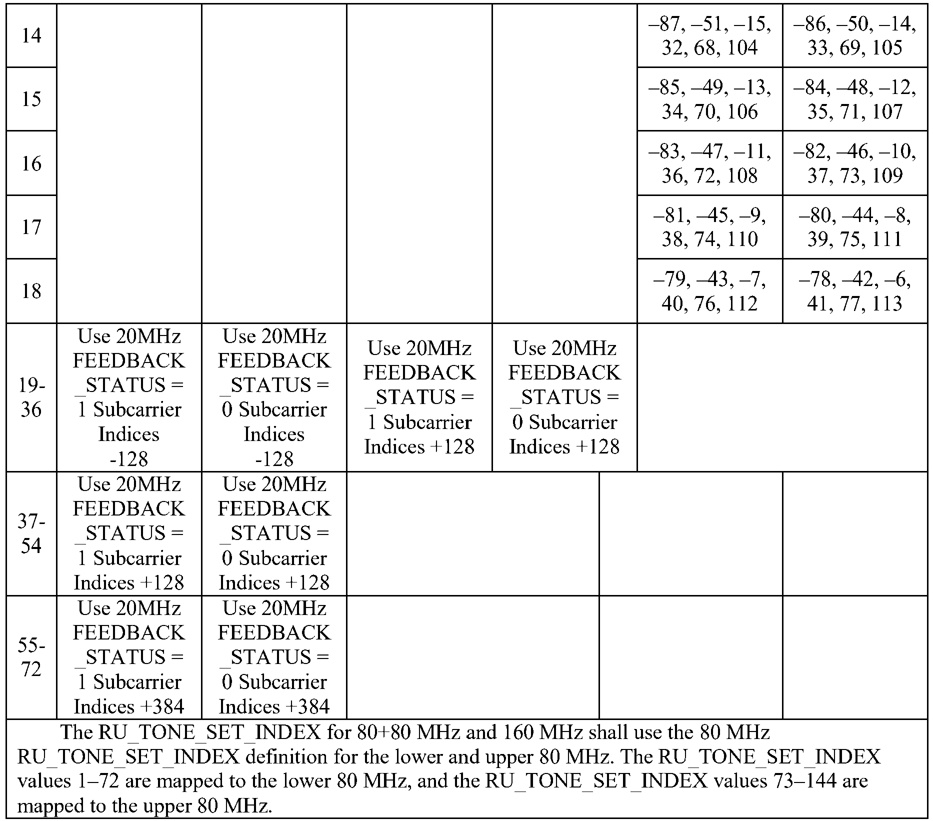

To put it simply, when the Number Of Spatially Multiplexed Users field in the NFRP trigger frame is set to 0, each RU_TONE_SET_INDEX corresponds to one non-AP STA (AID). When the bandwidth (BW) is 20MHz, for a non-AP STA using RU_TONE_SET_INDEX=1, a FEEDBACK_STATUS=1 indicates that subcarriers-113, -77, -41, 6, 42, and 78 in the HE-LTF have energy, while other subcarriers have no energy. A FEEDBACK_STATUS=0 indicates that subcarriers-112, -76, -40, 7, 43, and 79 in the HE-LTF have energy, while other subcarriers have no energy. When the BW is 40MHz or 80MHz, the subcarrier mapping relationship for 20MHz is expanded by 1 and 3 times respectively, so as to map more non-AP STAs (AIDs). The starting association identifier in the NFRP trigger frame corresponds to RU_TONE_SET_INDEX value 1. For example, if the starting association identifier is 6, then the non-AP STA with AID=6 corresponds to RU_TONE_SET_INDEX value 1, and the non-AP STA with AID=7 corresponds to RU_TONE_SET_INDEX value 2, and so on.

When the Number Of Spatially Multiplexed Users field in the NFRP trigger frame is set to 1, each RU_TONE_SET_INDEX corresponds to two non-AP STAs (AIDs). These two non-AP STAs are distinguished by different precoding matrices assigned in advance. The starting association identifier in the NFRP trigger frame corresponds to the RU_TONE_SET_INDEX value 1. For example, if the starting association identifier is 6, then the two non-AP STAs with AID=6 and AID=7 correspond to RU_TONE_SET_INDEX value 1, and the two non-AP STAs with AID=8 and AID=9 correspond to RU_TONE_SET_INDEX value 2, and so on.

To facilitate the understanding of the technical solution of the disclosure, the problems solved by the disclosure are described below.

For the transmission of event-driven (also known as non-predictable or hard-to-predict) low-latency traffic, directly reserving a channel for low-latency data transmission has the following issues: reserving too much can easily lead to waste, while reserving too little may result in only a small number of stations with low-latency traffic being able to complete the low-latency data transmission after UORA competition. In cases where a station uses a multi-user (MU) PPDU for single-user (SU) transmission, other stations cannot predict the length of the MU PPDU, making it difficult to align with the MU PPDU when transmitting low-latency data.

For event-driven (also known as non-predictable or hard-to-predict) low-latency traffic, such as traffic generated by user instant messaging interactions or sensors, it cannot be transmitted through pre-scheduled resources due to unpredictability. When it occurs, the station needs to wait to obtain a TXOP before it can transmit, resulting in that the low-latency traffic cannot be transmitted in a timely manner. Therefore, there is a need for a method that can achieve low-latency transmission.

Low-latency traffic: generally the traffic identified by restricted target wake time (R-TWT) identifier (TID) or stream classification service identifier (SCS ID).

Non-low-latency traffic: traffic that does not belong to the traffic identified by the R-TWT TID or the SCS ID.

Based on the above issues, the disclosure proposes an uplink transmission scheme. A first STA reserves m₁ frequency-domain units in a first uplink transmission. One or more other STAs with pending uplink low-latency traffic report buffer information of low-latency traffic on the m₁ frequency-domain units. Thus, the AP can obtain the buffer information of the uplink low-latency traffic of one or more other STAs in the contended TXOP of the first STA or the contended TXOP of the AP, thereby enabling the timely transmission of event-driven uplink low-latency traffic.

It should be noted that the AP cannot receive while performing downlink transmission, so reserving resources in the AP's downlink transmission does not make sense. Therefore, the disclosure mainly designs the reservation of resources during the uplink transmission (data frame, management frame, or control frame) of the station, for other stations to report buffer information of low-latency traffic (also known as low-latency uplink data) to the AP, to meet the transmission requirements of low-latency traffic. The reserved resource information is not only known to the station but also to the other stations, so this information is generally indicated in advance by the AP.

The disclosure does not directly transmit uplink low-latency data in the reserved subchannel or RU, but uses the NDP feedback report, which can avoid the alignment problem with the MU PPDU when the station uses MU PPDU for SU transmission.

To facilitate the understanding of the technical solution of the disclosure, the technical solution of the disclosure is described in detail through specific embodiments below. The related technologies below can be combined with the technical solution of embodiments of the disclosure at will, and all belong to the scope of protection of the disclosure. Embodiments of the disclosure includes at least some of the following contents.

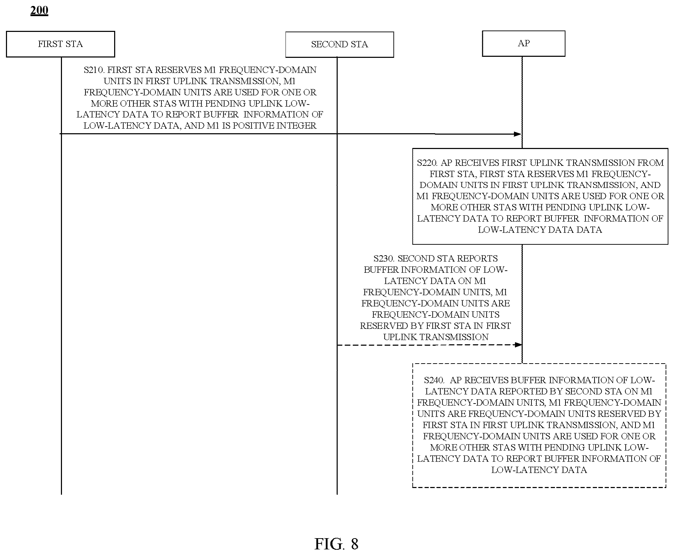

FIG.8 is a schematic flowchart of a wireless communication method 200 according to the disclosure. As illustrated in FIG.8, the wireless communication method 200 can include at least some of the following contents.

S210, a first STA reserves m₁ frequency-domain units in the first uplink transmission; where the m₁ frequency-domain units are used for one or more other STAs with pending uplink low-latency traffic (that is, uplink low-latency traffic to be transmitted) to report buffer information of low-latency traffic, and m₁ is a positive integer.

S220, an AP receives the first uplink transmission from the first STA; where the first STA reserves m₁ frequency-domain units in the first uplink transmission, and the m₁ frequency-domain units are used for one or more other STAs with pending uplink low-latency traffic to report buffer information of low-latency traffic.

S230, a second STA reports the buffer information of low-latency traffic on the m₁ frequency-domain units; where the m₁ frequency-domain units are frequency-domain units reserved by the first STA in the first uplink transmission.

S240, the AP receives the buffer information of low-latency traffic reported by the second STA on the m₁ frequency-domain units; where the m₁ frequency-domain units are frequency-domain units reserved by the first STA in the first uplink transmission, and the m₁ frequency-domain units are used for one or more other STAs with pending uplink low-latency traffic to report the buffer information of low-latency traffic.

It should be understood that FIG.8 illustrates the steps or operations of the wireless communication method 200, but these steps or operations are only examples, and the disclosure can also perform other operations or variations of the operations in FIG.8.

In the disclosure, the above S230 and S240 are optional steps. For example, in the case where the second STA has uplink low-latency traffic to be transmitted, the above S230 and S240 exist. For another example, in the case where the second STA has more than x (x is a positive number or 0) uplink low-latency traffic to be transmitted, the above S230 and S240 exist.

In the disclosure, "field" can also be called "subfield". A field can occupy one or more bytes (octet), or a field can occupy one or more bits.

In the disclosure, the second STA can be another STA belonging to the same WLAN network as the first STA. Specifically, specific operations of other STAs other than the second STA can refer to the second STA, which will not be repeated here.

The "tone" in the disclosure can also be called a "subcarrier", or the "subcarrier" in the disclosure can also be called a "tone", and the two are interchangeable.

It should be noted that low-latency traffic can also be called low-latency (LL) data, and the disclosure does not limit this.

In the disclosure, before other STAs report the buffer information of low-latency traffic, the AP does not need to send the NFRP trigger frame, which makes reporting of the buffer information of low-latency traffic more flexible and can also avoid the signaling overhead caused by sending the NFRP trigger frame.

In some embodiments, other STAs reporting the buffer information of low-latency traffic support the low-latency traffic volume reporting function. Specifically, since legacy STA do not support the low-latency traffic reporting function, legacy STA will not report the buffer information of low-latency traffic on the reserved frequency-domain units.

In some embodiments, the buffer information of low-latency traffic reported by other STAs can be a BSR, or it can be other information, and the disclosure does not limit this.

In some embodiments, the frequency-domain units in the m₁ frequency-domain units are RUs. That is, m₁ RUs are used for one or more other STAs with pending low-latency traffic to report the buffer information of low-latency traffic.

For example, when m₁ ≥2, the m₁ frequency-domain units (i.e., RUs) can be located in one subchannel. For another example, when m₁ ≥2, the m₁ frequency-domain units (i.e., RUs) can be located in multiple subchannels, the multiple subchannels can be continuous or discontinuous. For another example, the m₁ frequency-domain units (i.e., RUs) are one complete subchannel (such as a 20MHz subchannel).

Specifically, in this embodiment, when the frequency-domain units in the m₁ frequency-domain units are RUs, frequency-domain resource reservation can be made at the RU granularity. Compared with frequency-domain resource reservation at the subchannel or channel granularity, the granularity of resource reservation is smaller, the waste of resources is smaller, and the frequency-domain resources can be more fully utilized.

In some embodiments, the frequency-domain units in the m₁ frequency-domain units are subchannels (such as 20MHz subchannels). That is, m₁ subchannels are used for one or more other STAs with pending low-latency traffic to report the buffer information of low-latency traffic.

In some embodiments, the first uplink transmission is an uplink transmission (such as data frame and/or management frame) executed by the first STA after obtaining a TXOP. For example, the first uplink transmission is an uplink data transmission executed by the first STA after obtaining the TXOP.

In some embodiments, the first uplink transmission is an uplink transmission (such as data frame and/or management frame) triggered by the AP after the AP obtains a TXOP. For example, the first uplink transmission is an uplink data transmission executed by the first STA after being triggered by the AP.

In some embodiments, the first uplink transmission is an uplink response or uplink acknowledgment to downlink transmission (such as data frame and/or management frame) executed by the AP after the AP obtains the TXOP. For example, the uplink response or uplink acknowledgment can be made through management frames and/or acknowledgment (Ack) frames and/or block acknowledgment (Block Ack, BA) frames.

In embodiments of the disclosure, in a contended TXOP of the first STA or a contended TXOP of the AP, the AP may acquire buffer information of uplink low-latency traffic reported by one or more other STAs on m₁ frequency-domain units reserved by the first STA in the first uplink transmission, thereby enabling timely transmission of event-driven uplink low-latency traffic.

In some embodiments, the m₁ frequency-domain units are specified by protocol, or configured by the AP (semi-statically or dynamically), or configured by a physical AP MLD to which the AP belongs (semi-statically or dynamically), or configured by a virtual AP MLD to which the AP belongs (semi-statically or dynamically).

In some embodiments, before the first STA performs the first uplink transmission, the first STA receives a first trigger frame, where the first trigger frame includes a first field.

The first field indicates to the first STA to reserve in at least one uplink transmission frequency-domain units for reporting buffer information of low-latency traffic, where the at least one uplink transmission includes the first uplink transmission. Or, the first field indicate to the first STA to reserve in an uplink transmission in a first TXOP frequency-domain units for reporting buffer information of low-latency traffic, where the first uplink transmission is the uplink transmission in the first TXOP.

Specifically, before the first STA performs the first uplink transmission, the first STA receives the first trigger frame sent by the AP.

In some embodiments, the first TXOP is a TXOP obtained by the first STA. That is, the first field indicates to the first STA to reserve in the TXOP obtained by the first STA frequency-domain units for reporting buffer information of low-latency traffic in an uplink transmission.

In some embodiments, the first TXOP is a TXOP obtained by the AP. That is, the first field indicates to the first STA to reserve in the TXOP obtained by the AP frequency-domain units for reporting buffer information of low-latency traffic in an uplink transmission.

In some embodiments, the at least one uplink transmission may be indicated by the AP via other fields in the first trigger frame, or indicated by the AP via other frames, or indicated by the AP via the first field itself.

In some embodiments, the first TXOP may be indicated by the AP via other fields in the first trigger frame, or indicated by the AP via other frames, or indicated by the AP via the first field itself.

In some embodiments, the first field may occupy one bit, where: a value of 0 indicates to the first STA to reserve in at least one uplink transmission frequency-domain units for reporting buffer information of low-latency traffic, or a value of 0 indicates to the first STA to reserve in an uplink transmission in the first TXOP frequency-domain units for reporting buffer information of low-latency traffic; or a value of 1 indicates to the first STA to reserve in at least one uplink transmission frequency-domain units for reporting buffer information of low-latency traffic, or a value of 1 indicates to the first STA to reserve in an uplink transmission in the first TXOP transmission frequency-domain units for reporting buffer information of low-latency traffic.

In some embodiments, the first field may be located in a Common Info field of the first trigger frame. For example, the AP may use one reserved bit in the Common Info field of the first trigger frame as the first field to indicate to the STA triggered by the first trigger frame to reserve in an uplink transmission(s) frequency-domain units (e.g., subchannels or RUs) for reporting buffer information of low-latency traffic. The specific frequency-domain units (e.g., subchannels or RUs) are preconfigured.

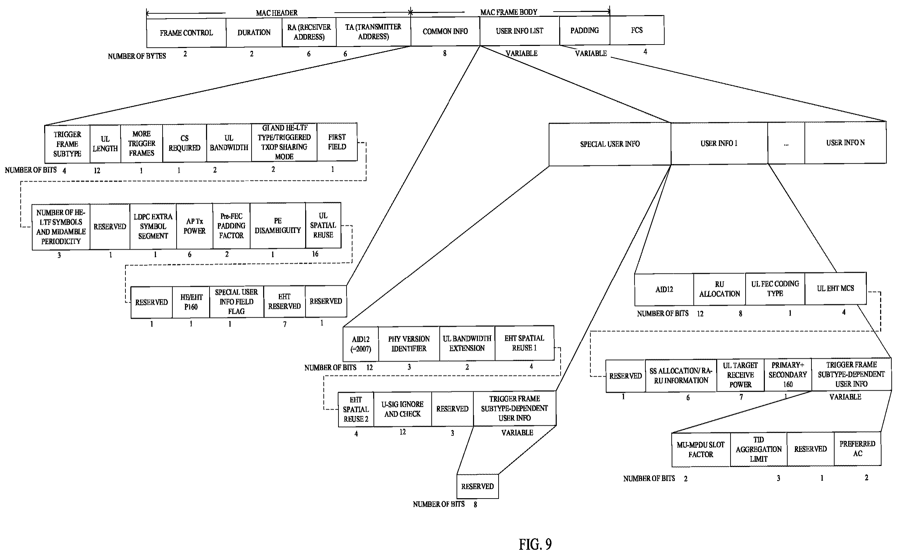

For example, the first trigger frame may be structured as illustrated in FIG. 9, where in the Common Info field, the first field is located after the GI And HE-LTF Type/Triggered TXOP Sharing Mode field, and before the Number Of HE-LTF Symbols And Midamble Periodicity field.

For example, the first trigger frame may be structured as illustrated in FIG. 10, where in the Common Info field, the first field is located after the Number Of HE-LTF Symbols And Midamble Periodicity field, and before the LDPC Extra Symbol Segment field.

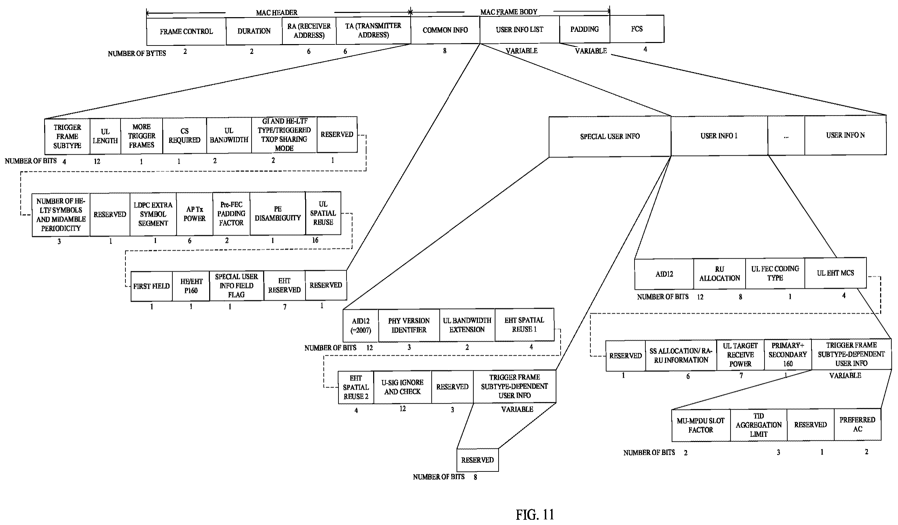

For example, the first trigger frame may be structured as illustrated in FIG. 11, where in the Common Info field, the first field is located after the UL Spatial Reuse field, and before the HE/EHT P160 field.

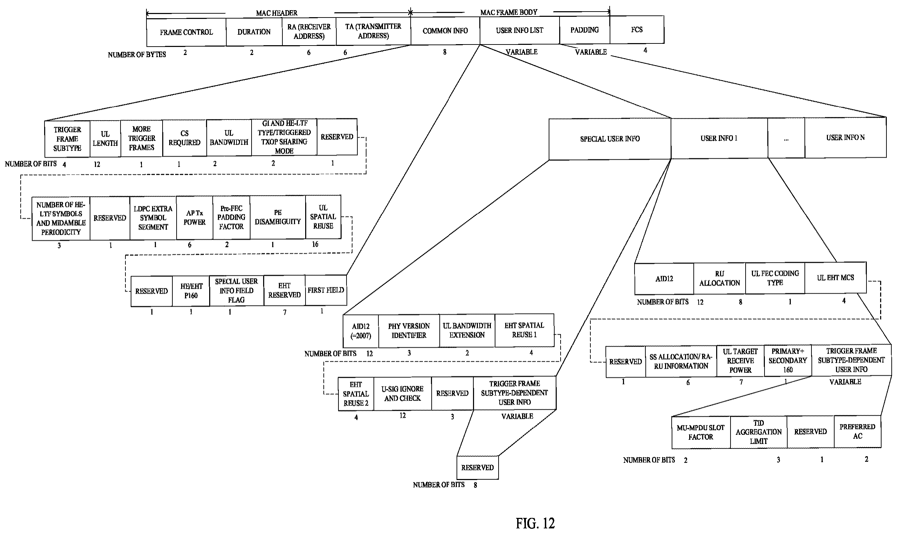

For example, the first trigger frame may be structured as illustrated in FIG. 12, where in the Common Info field, the first field is located after the EHT Reserved field.

As illustrated in FIG. 9 to FIG. 12, the Common Info field of the first trigger frame further includes the following fields: Trigger Frame Type (4 Bits), UL Length (12 Bits), More Trigger Frames (TF) (1 Bit), CS Required (1 Bit), UL Bandwidth (2 Bits), GI And HE-LTF Type/Triggered TXOP Sharing Mode (2 Bits), Number Of HE-LTF Symbols And Midamble Periodicity (3 Bits), LDPC Extra Symbol Segment (1 Bit), AP TX Power (6 Bits), Pre Forward Error Correction (Pre-FEC) Padding Factor (2 Bits), Packet Extension (PE) Disambiguity (1 Bit), UL Spatial Reuse (16 Bits), HE/EHT P160 (1 Bit), Special User Info Field Flag (1 Bit), EHT Reserved (7 Bits).

In some embodiments, the first trigger frame further includes a second field, which indicates information of the frequency-domain units to be reserved by the first STA for reporting buffer information of low-latency traffic.

For example, the AP may use four reserved bits (e.g., in a Special User Info field) as the second field to indicate the numbering of reserved frequency-domain units (e.g., subchannels). Within the operating bandwidth of the current basic service set (BSS), subchannels may be numbered in ascending or descending order of center frequency, or by other predefined methods. Notably, a subchannel corresponding to the primary channel cannot be reserved.

Alternatively, the AP may use eight reserved bits in a Special User Info field (where the AID12 field has a special value of 2007) in the first trigger frame as the second field to indicate reserved RUs. The numbering manner for the RUs are consistent with that for the RU Allocation field.

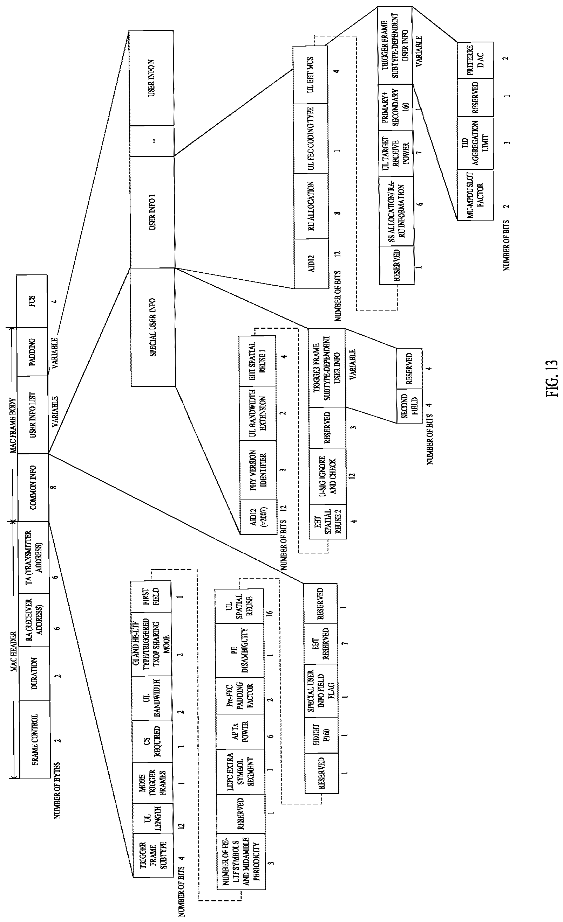

For example, the first trigger frame may be structured as illustrated in FIG. 13, where in the Common Info field, the first field is located after the GI And HE-LTF Type/Triggered TXOP Sharing Mode field and before the Number Of HE-LTF Symbols And Midamble Periodicity field; in the Special User Info field within the User Info List, the second field (4 bits) is located in the Trigger Frame Subtype-Dependent User Info field.

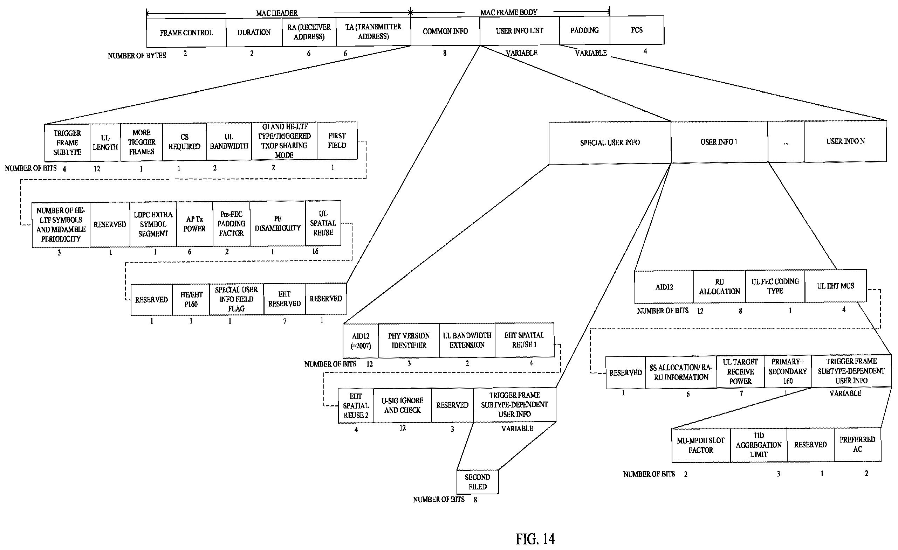

For example, the first trigger frame may be structured as illustrated in FIG. 14, where in the Common Info field, the first field is located after the GI And HE-LTF Type/Triggered TXOP Sharing Mode field and before the Number Of HE-LTF Symbols And Midamble Periodicity field; in the Special User Info field within the User Info List, the second field (8 bits) is located in the Trigger Frame Subtype-Dependent User Info field.

As illustrated in FIG. 13 to FIG. 14, the Special User Info field in the first trigger frame further includes the following fields: AID12 (=2007), PHY Version Identifier, UL Bandwidth Extension, EHT Spatial Reuse 1, EHT Spatial Reuse 2, User Signal (U-SIG) Ignore And Check, Trigger Frame Subtype-Dependent User Info.

As illustrated in FIG. 9 to FIG. 14, the User Info field in the first trigger frame includes: AID12, RU Allocation, UL FEC Coding Type, UL EHT modulation and coding scheme (MCS), spatial stream (SS) Allocation/random access resource unit (RA-RU) Information, UL Target Receive (Rx) Power, Primary+ Secondary 160, Trigger Frame Subtype-Dependent User Info. The Trigger Frame Subtype-Dependent User Info field includes: multi-user medium access control protocol data unit (MU-MPDU) Slot Factor, TID Aggregation Limit, Preferred access category (AC).

In some embodiments, the first trigger frame further includes a third field, which indicates parameters for NDP feedback by the other STAs.

In some embodiments, the NDP feedback parameters may include, but are not limited to: Association ID (AID), Starting AID, Feedback Type, UL Target Receive Power, Number of Spatially Multiplexed Users.

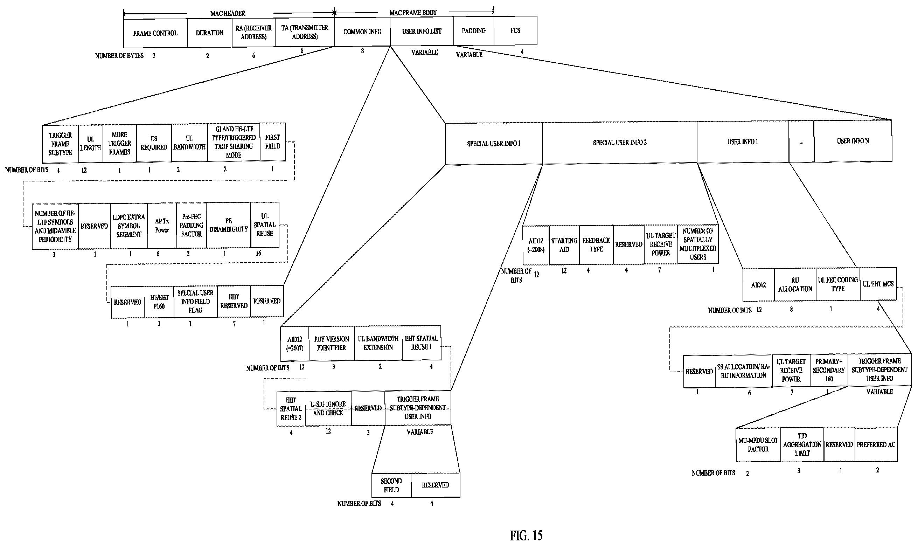

For example, the third field may be a Special User Info 2 field. Specifically, the first trigger frame may be structured as illustrated in FIG. 15, where in the Common Info field, the first field is located after the GI And HE-LTF Type/Triggered TXOP Sharing Mode field and before the Number Of HE-LTF Symbols And Midamble Periodicity field; in the Special User Info 1 field within the User Info List, the second field (8 bits) is located in the Trigger Frame Subtype-Dependent User Info subfield. Additionally, the User Info List further includes a Special User Info 2 field (i.e., the third field), which contains: AID12 (=2008), Starting AID, Feedback Type, UL Target Receiver Power, Number of Spatially Multiplexed Users.

In some embodiments, if the first uplink transmission is performed by the first STA after obtaining a TXOP, and one or more other STAs report buffer information of low-latency traffic on the m₁ frequency-domain units, the first STA receives preemption indication information from the AP. The preemption indication information indicates that the AP will preempt for a TXOP obtained by the first STA.

In some embodiments, the preemption indication information is carried in a Block Ack (BA) frame corresponding to the first uplink transmission, or carried in a management frame.

In some embodiments, if the preemption indication information is carried in the BA frame corresponding to the first uplink transmission, the BA Control field of the BA frame corresponding to the first uplink transmission includes a subfield indicating that the AP will contend for the TXOP obtained by the first STA.

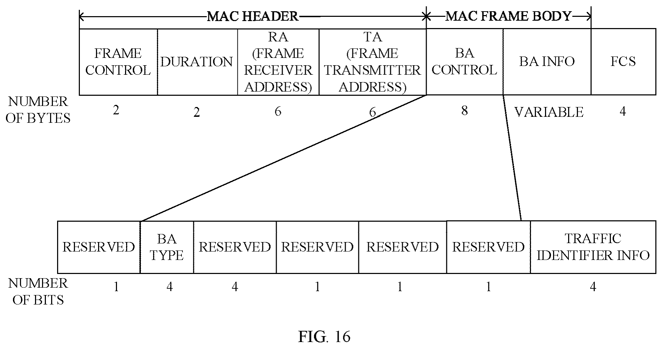

For example, as illustrated in FIG.16, the AP uses a reserved bit in the BA Control field of the BA frame to indicate that the AP will contend for the TXOP obtained by the first STA.

In some embodiments, after learning that the first STA or the AP has enabled a latency-sensitive transmission prioritized mode (also referred to as a low-latency transmission prioritized mode), another STA (e.g., a second STA) determines that the first STA has reserved in the first uplink transmission frequency-domain units for reporting buffer information of low-latency traffic.

For example, after learning that the first STA or the AP has enabled the latency-sensitive transmission prioritized mode (also referred to as the low-latency transmission prioritized mode), another STA (e.g., a second STA) determines that the first STA has reserved in at least one uplink transmission frequency-domain units for reporting buffer information of low-latency traffic, where the at least one uplink transmission includes the first uplink transmission.

For example, after learning that the first STA or the AP has enabled the latency-sensitive transmission prioritized mode (also referred to as the low-latency transmission prioritized mode), another STA (e.g., a second STA) determines that the first STA has reserved in an uplink transmission in the first TXOP frequency-domain units for reporting buffer information of low-latency traffic, where the first uplink transmission is the uplink transmission in the first TXOP.

In some embodiments, when the first STA has enabled the latency-sensitive transmission prioritized mode, another STA (e.g., a second STA) learns through a beacon frame or a management frame sent by the AP that the first STA has enabled the latency-sensitive transmission prioritized mode.

For example, the first STA performs mode changing in advance (i.e., enabling the latency-sensitive transmission prioritized mode, also referred to as the low-latency transmission prioritized mode), and the AP broadcasts in a beacon frame that the first STA has enabled the latency-sensitive transmission prioritized mode (the mode changing of the first STA takes effect after at least one beacon frame transmission). The specific reserved frequency-domain units (i.e., m₁ frequency-domain units) may be predefined, or may be indicated in the beacon frame. After enabling the latency-sensitive transmission prioritized mode, the first STA reserves in at least one uplink transmission frequency-domain units for reporting buffer information of low-latency traffic, or reserves in an uplink transmission in the first TXOP frequency-domain units for reporting buffer information of low-latency traffic.

For example, the first STA performs mode changing in advance (i.e., enabling the latency-sensitive transmission prioritized mode, also referred to as the low-latency transmission prioritized mode), and the AP sends a newly defined broadcast management frame to announce that the first STA has enabled the latency-sensitive transmission prioritized mode. The specific reserved frequency-domain units (i.e., m₁ frequency-domain units) may be predefined, or indicated in the newly defined management frame. After enabling the latency-sensitive transmission prioritized mode, the first STA reserves in at least one uplink transmission frequency-domain units for reporting buffer information of low-latency traffic, or reserves in an uplink transmission in the first TXOP frequency-domain units for reporting buffer information of low-latency traffic.

In some embodiments, the latency-sensitive transmission prioritized mode corresponding to the first STA is enabled based on a request from the AP, or the latency-sensitive transmission prioritized mode corresponding to the first STA is enabled and notified by the first STA to the AP.

In some embodiments, when the latency-sensitive transmission prioritized mode corresponding to the first STA is enabled based on a request from the AP, an enabling duration of the latency-sensitive transmission prioritized mode is configured by the AP in request information, and/or the m₁ frequency-domain units are configured by the AP in the request information.

For example, the AP may send a management frame to at least one STA to request enabling the latency-sensitive transmission prioritized mode (also referred to as the low-latency transmission prioritized mode). Optionally, the management frame may further indicate the following information: the enabling duration of the latency-sensitive transmission prioritized mode, and/or the specific reserved frequency-domain units (i.e., m₁ frequency-domain units). When the latency-sensitive transmission prioritized mode is enabled, the STA may reserve frequency-domain units (subchannels or RUs) in an uplink transmission in a TXOP obtained by the STA, to allow other STAs to report buffer information of low-latency traffic to the AP, and the AP may preempt for transmission time in the TXOP obtained by the at least one STA for uplink and/or downlink low-latency traffic transmission by other STAs. For example, the AP may also send a management frame to the at least one STA to request disabling the latency-sensitive transmission prioritized mode.

In some embodiments, when the latency-sensitive transmission prioritized mode corresponding to the first STA is enabled and notified by the first STA to the AP, an enabling duration of the latency-sensitive transmission prioritized mode is indicated by the first STA in notification information, and/or the m₁ frequency-domain units are configured by the first STA in the notification information, and/or the m₁ frequency-domain units are configured by the AP in a notification response.

For example, the STA may send a management frame to the AP to notify enabling the latency-sensitive transmission prioritized mode (also referred to as the low-latency transmission prioritized mode). Optionally, the management frame may further indicate the following information: the enabling duration of the latency-sensitive transmission prioritized mode, and/or the specific reserved frequency-domain units (i.e., m₁ frequency-domain units). The AP responds with a management frame, which may further confirm the specific reserved frequency-domain units or indicate to modify the specific reserved frequency-domain units (i.e., m₁ frequency-domain units). When the latency-sensitive transmission prioritized mode is enabled, the STA may reserve frequency-domain units (subchannels or RUs) in an uplink transmission in its obtained TXOP, to allow other STAs to report buffer information of low-latency traffic to the AP, and the AP may contend for transmission time in the TXOP obtained by the at least one STA for uplink and/or downlink low-latency traffic transmission of other STAs. For example, the STA may also send a management frame to the AP to notify disabling the latency-sensitive transmission prioritized mode.

In some embodiments, when the AP has enabled the latency-sensitive transmission prioritized mode, another STA (e.g., a second STA) learns that the AP has enabled the latency-sensitive transmission prioritized mode through at least one of the following frames sent by the AP: a beacon frame, a probe response frame, an association response frame, a re-association response frame, an operation mode notification frame, or a newly defined management frame.

In some embodiments, while indicating that it has enabled the latency-sensitive transmission prioritized mode, the AP further indicates at least one of the following: an enabling duration of the latency-sensitive transmission prioritized mode corresponding to the AP, or the m₁ frequency-domain units.

In some embodiments, enabling and/or disabling of the latency-sensitive transmission prioritized mode corresponding to the AP is associated with transmission information of low-latency traffic in a basic service set (BSS), or enabling and/or disabling of the latency-sensitive transmission prioritized mode corresponding to the AP is set by user signaling.

For example, the AP may enable the latency-sensitive transmission prioritized mode (also referred to as the low-latency transmission prioritized mode). When the latency-sensitive transmission prioritized mode is enabled, the AP may require, in a TXOP obtained by the AP, the STA to reserve frequency-domain units (subchannels or RUs) in an uplink transmission, for other STAs to report buffer information of low-latency traffic to the AP. For example, the AP may send a management frame (e.g., a beacon frame, a probe response frame, an association response frame, a re-association response frame, or an operation mode notification frame) to notify the STA of the enabling of the latency-sensitive transmission prioritized mode. Optionally, the management frame may further indicate the following information: the enabling duration of the latency-sensitive transmission prioritized mode, and/or the specific reserved frequency-domain units (i.e., m₁ frequency-domain units). For another example, the AP may send a management frame (e.g., a beacon frame, a probe response frame, an association response frame, a re-association response frame, or an operation mode notification frame) to notify the STA of the disabling of the latency-sensitive transmission prioritized mode.

In some embodiments, after learning that the first STA has reserved frequency-domain units for reporting buffer information of low-latency traffic in a contended TXOP, another STA (e.g., a second STA) determines that the first STA has reserved frequency-domain units in every uplink transmission in the TXOP, for reporting buffer information of low-latency traffic.

In some embodiments, another STA (e.g., a second STA) learns through a request to send (RTS) frame sent by the first STA that the first STA has reserved, in the contended TXOP of the first STA, frequency-domain units for reporting buffer information of low-latency traffic.

Here, an Individual/Group bit in a Receiver Address (RA) field of the RTS frame is used to indicate whether the first STA has reserved, in the current TXOP, frequency-domain units for reporting buffer information of low-latency traffic.

For example, the first STA indicates in the sent RTS frame whether it has reserved frequency-domain units for reporting buffer information of low-latency traffic. For example, setting the Individual/Group bit in the RA field of the RTS frame to 1 indicates that the first STA has reserved, in the current TXOP, frequency-domain units for reporting buffer information of low-latency traffic, while setting it to 0 indicates that the first STA has not reserved, in the current TXOP, such frequency-domain units. The specific reserved frequency-domain unit information may be predefined, or indicated by the AP in a previous beacon frame.

In some embodiments, another STA (e.g., a second STA) learns through a second trigger frame sent by the AP that the first STA has reserved, in the first uplink transmission, frequency-domain units for reporting buffer information of low-latency traffic.

In some embodiments, the second trigger frame includes a fourth field.

The fourth field indicates that the first STA has reserved, in at least one uplink transmission, frequency-domain units for reporting buffer information of low-latency traffic, where the at least one uplink transmission includes the first uplink transmission. Alternatively, the fourth field is used to indicate that the first STA has reserved, in an uplink transmission in the first TXOP, frequency-domain units for reporting buffer information of low-latency traffic, where the first uplink transmission is the uplink transmission in the first TXOP.

In some embodiments, the first TXOP is a TXOP obtained by the first STA, or the first TXOP is a TXOP obtained by the AP.

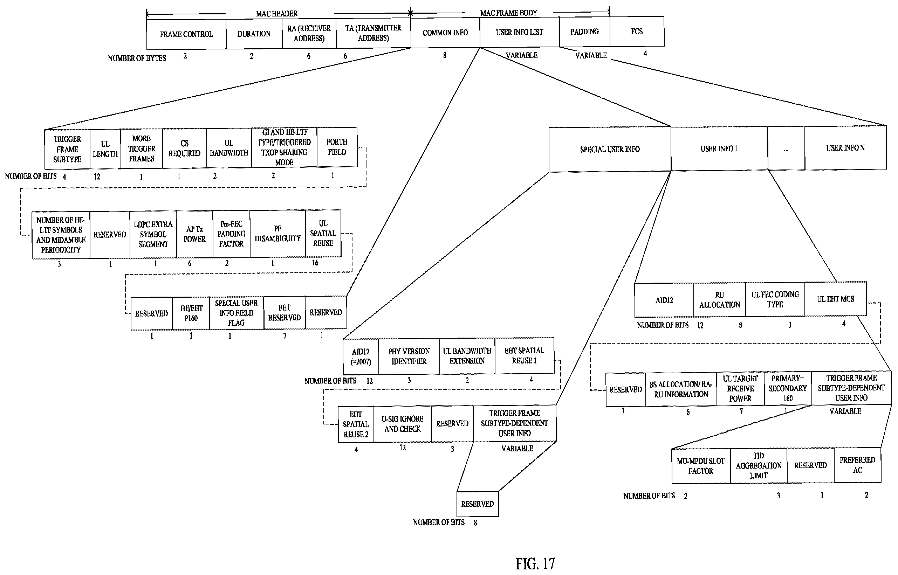

For example, the second trigger frame may be as illustrated in FIG.17, where in the Common Information field, the fourth field is located after the GI And HE-LTF Type/Triggered TXOP Sharing Mode field and before the Number Of HE-LTF Symbols And Midamble Periodicity field.

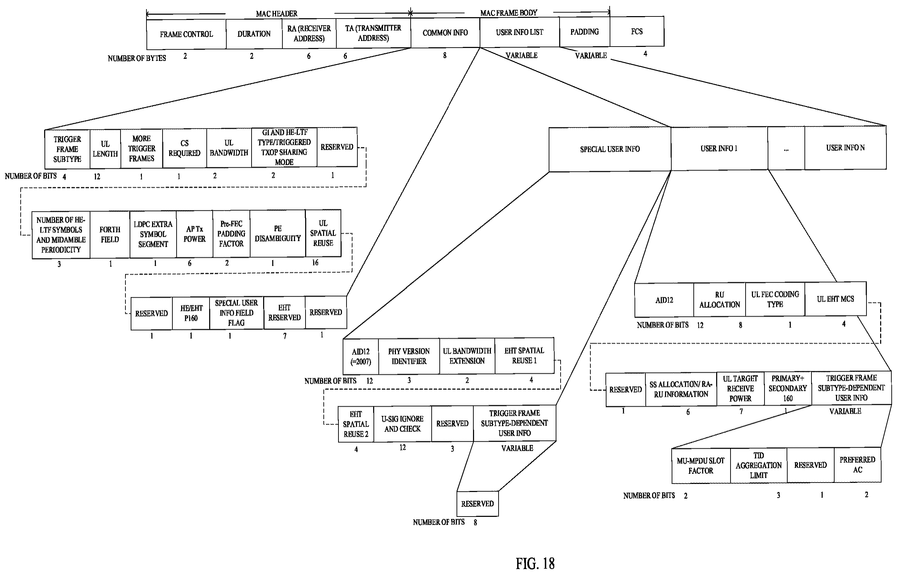

For example, the second trigger frame may be as illustrated in FIG.18, where in the Common Information field, the fourth field is located after the Number Of HE-LTF Symbols And Midamble Periodicity field and before the LDPC Extra Symbol Segment field.

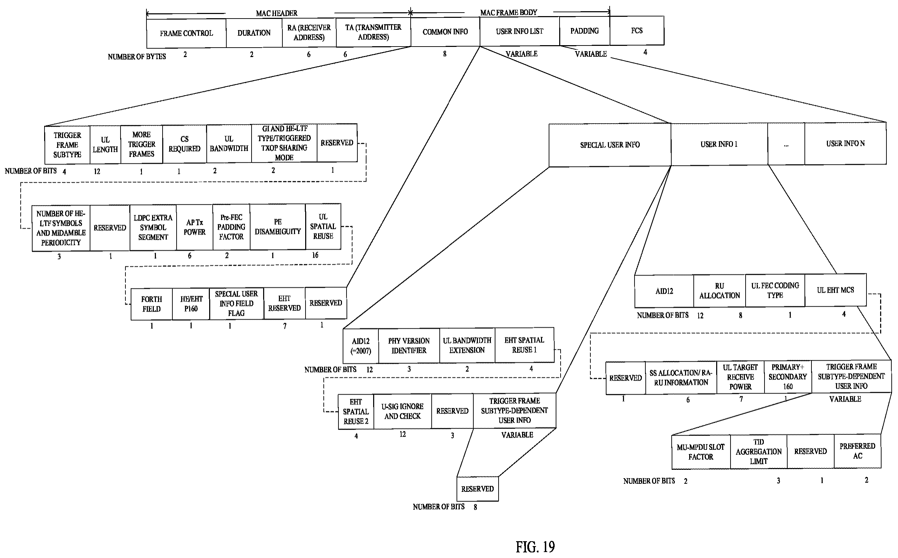

For example, the second trigger frame may be as illustrated in FIG.19, where in the Common Information field, the fourth field is located after the UL Spatial Reuse field and before the HE/EHT P160 field.

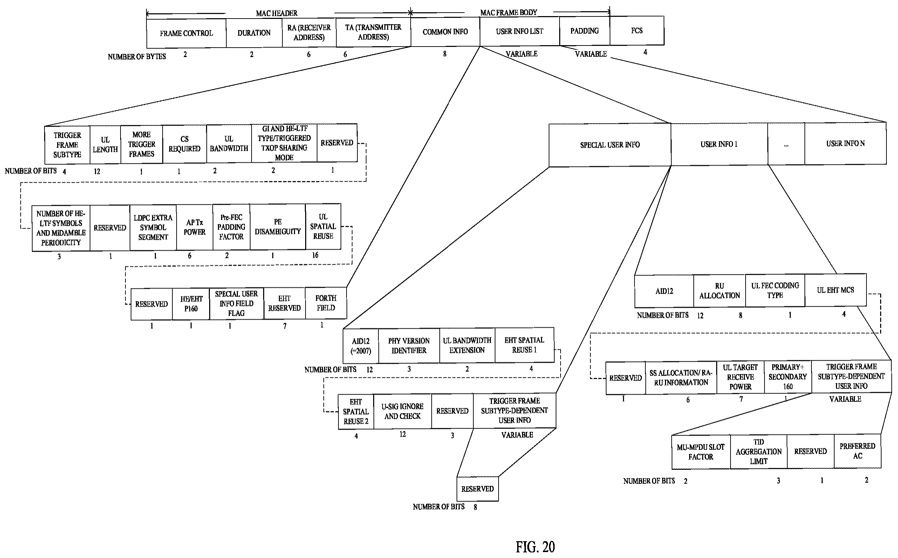

For example, the second trigger frame may be as illustrated in FIG.20, where in the Common Information field, the fourth field is located after the EHT Reserved field.

In some embodiments, the second trigger frame includes a fifth field, where the fifth field indicates information of frequency-domain units reserved by the first STA for reporting buffer information of low-latency traffic.

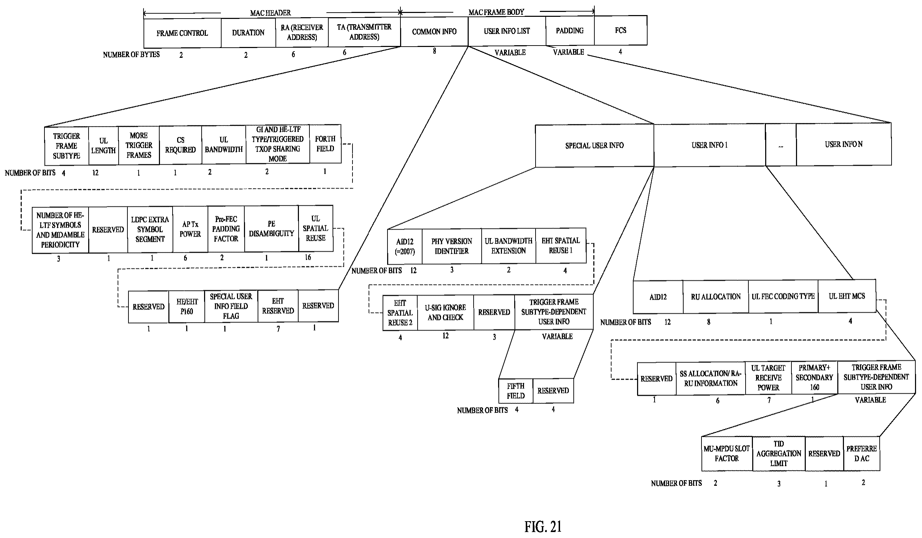

For example, the second trigger frame may be as illustrated in FIG.21, where in the Common Information field, the fourth field is located after the GI And HE-LTF Type/Triggered TXOP Sharing Mode field and before the Number Of HE-LTF Symbols And Midamble Periodicity field. Additionally, in the Special User Information field in a user information list, the fifth field (4 bits) may be located in the Trigger Frame Subtype-Dependent User Information field.

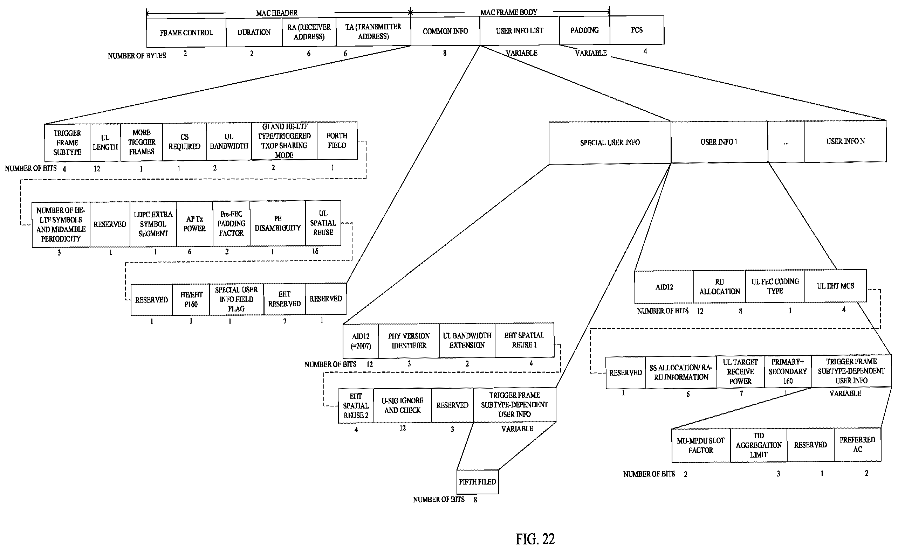

For example, the second trigger frame may be as illustrated in FIG.22, where in the Common Information field, the fourth field is located after the GI And HE-LTF Type/Triggered TXOP Sharing Mode field and before the Number Of HE-LTF Symbols And Midamble Periodicity field. Additionally, in the Special User Information field in a user information list, the fifth field (8 bits) may be located in the Trigger Frame Subtype-Dependent User Information field.

In some embodiments, another STA (e.g., a second STA) uses part or all of the m₁ frequency-domain units to report buffer information of low-latency traffic. Alternatively, another STA (e.g., a second STA) reports buffer information of low-latency traffic on available frequency-domain units among the m₁ frequency-domain units obtained through an UORA mechanism.

For example, when the second STA has pending UL low-latency traffic, the second STA reports buffer information of low-latency traffic on part or all of the m₁ frequency-domain units.

For example, when the second STA has pending UL low-latency traffic, the second STA reports buffer information of low-latency traffic on available frequency-domain units among the m₁ frequency-domain units obtained through the UORA mechanism.

In some embodiments, when another STA (e.g., a second STA) reports buffer information of low-latency traffic on available frequency-domain units among the m₁ frequency-domain units obtained through the UORA mechanism, the buffer information of low-latency traffic is carried in a QoS Null frame.

In some embodiments, the first STA reserves m₂ frequency-domain units in a second uplink transmission, where the m₂ frequency-domain units are used by one or more other STAs with pending low-latency traffic to report buffer information of low-latency traffic, and m₂ is a positive integer.

For example, the second STA reports buffer information of low-latency traffic on the m₂ frequency-domain units, where the m₂ frequency-domain units are frequency-domain units reserved by the first STA in the second uplink transmission, and m₂ is a positive integer.

In some embodiments, the frequency-domain units in the m₂ frequency-domain units are RUs, or the frequency-domain units in the m₂ frequency-domain units are subchannels.

In some embodiments, the frequency-domain units in the m₁ frequency-domain units are the same as the frequency-domain units in the m₂ frequency-domain units. For example, the frequency-domain units in the m₁ frequency-domain units and the frequency-domain units in the m₂ frequency-domain units are the same RUs, or the frequency-domain units in the m₁ frequency-domain units and the frequency-domain units in the m₂ frequency-domain units are the same subchannels.

In some embodiments, the frequency-domain units in the m₁ frequency-domain units are different from the frequency-domain units in the m₂ frequency-domain units. For example, the frequency-domain units in the m₁ frequency-domain units are RUs, and the frequency-domain units in the m₂ frequency-domain units are subchannels. For another example, the frequency-domain units in the m₁ frequency-domain units are subchannels, and the frequency-domain units in the m₂ frequency-domain units are RUs. For another example, the frequency-domain units in the m₁ frequency-domain units and the frequency-domain units in the m₂ frequency-domain units are RUs located at different frequency positions. For another example, the frequency-domain units in the m₁ frequency-domain units and the frequency-domain units in the m₂ frequency-domain units are subchannels located at different frequency positions.

In some embodiments, the first uplink transmission and the second uplink transmission may belong to the same TXOP, or the first uplink transmission and the second uplink transmission may belong to different TXOPs.

In some embodiments, the first uplink transmission is one uplink transmission in periodic uplink transmissions, and/or the second uplink transmission is one uplink transmission in periodic uplink transmissions.

In some embodiments, one or more other STAs with more than x pending UL low-latency traffic report buffer information of low-latency traffic through an NDP or a QoS Null frame, where x is 0 or a positive number.

For example, when the number of pending UL low-latency traffic exceeds x, the second STA reports buffer information of low-latency traffic through an NDP or a QoS Null frame, where x is 0 or a positive number.

In some embodiments, the NDP may be an HE TB feedback NDP, or the NDP may be a newly defined NDP. Of course, the NDP may also be another NDP, which is not limited in the embodiments of the disclosure.

In some embodiments, the value of x is specified by a protocol, or the value of x is configured or indicated by the AP in a beacon frame or a trigger frame.

In some embodiments, when another STA (e.g., a second STA) reports buffer information of low-latency traffic through an NDP, a tone set index or subcarrier set index used by an Ultra-High Reliability Long Training field (UHR-LTF) in the NDP indicates an association identifier (AID) of the STA sending the NDP.

In some embodiments, the AID of each STA sending an NDP is associated with one tone set index or one subcarrier set index.

In some embodiments, the bandwidth used by the UHR-LTF in the NDP is one of the following: 20 MHz, 40 MHz, 80 MHz, 80+80 MHz, 160 MHz, or 320 MHz.

In some embodiments, the bandwidth used by the UHR-LTF in the NDP is one of the following: 26-tone, 52-tone, or 106-tone. A 242-tone bandwidth is equivalent to one 20 MHz subchannel. Larger bandwidths may be formed by combining 26-tone, 52-tone, 106-tone, and 242-tone.

In some embodiments, each tone set index corresponds to n₁ subcarriers, where n₁ = 4, 5, or 6.

In some embodiments, each subcarrier set index corresponds to n₂ subcarriers, where n₂ = 4, 5, or 6.

Specifically, when the reserved frequency-domain units are one or more 20 MHz subchannels, the HE TB feedback NDP format may be used. In this case, the mapping of the RU_TONE_SET_INDEX in the HE-LTF field may be optimized. In the mapping illustrated in Table 2, each AID corresponds to one set of subcarriers when the FEEDBACK_STATUS is 0 and corresponds to another set of subcarriers when the FEEDBACK_STATUS is 1. In the embodiments of the disclosure, STAs without low-latency data do not need to transmit an NDP (i.e., do not need to use the FEEDBACK_STATUS value of 0), so the corresponding subcarriers may be used for the FEEDBACK_STATUS value of 1 for other AIDs. For example, in the mapping illustrated in Table 2, if the starting AID is 6, the subcarrier groups {-113, -77, -41, 6, 42, 78} and {-112, -76, -40, 7, 43, 79} in the 20 MHz bandwidth correspond to the FEEDBACK_STATUS values of 1 and 0 for the STA with the starting AID of 6, respectively. In the embodiments of the disclosure, these may be modified so that {-113, -77, -41, 6, 42, 78} and {-112, -76, -40, 7, 43, 79} correspond to the FEEDBACK_STATUS value of 1 for STAs with AIDs of 6 and 7, respectively, and so on.

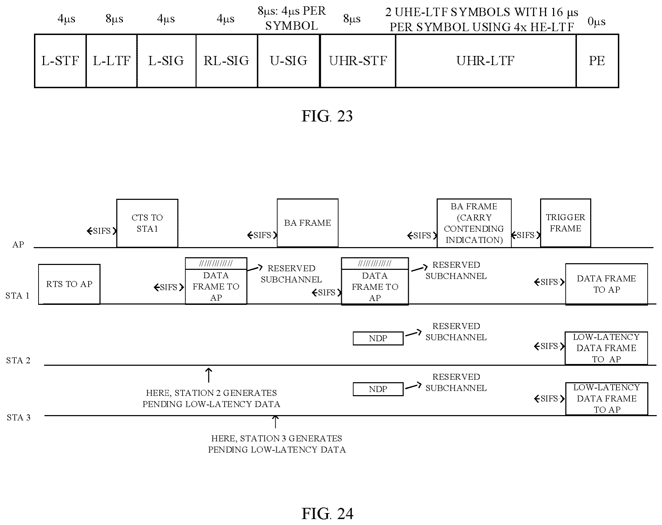

It should be noted that the HE TB feedback NDP format can only be transmitted on one or more complete 20 MHz subchannels. When an NDP needs to be transmitted on a smaller RU, a newly defined NDP format is required, mainly defining the subcarrier mapping of the RU_TONE_SET_INDEX in the UHR-LTF field as illustrated in FIG.23.

In some embodiments, the subcarrier mapping of the RU_TONE_SET_INDEX is as illustrated in Table 4 below.

| RU_TO NE_SET _INDEX | 26-tone RU | 52-tone RU | 106-tone RU |
|---|---|---|---|
| | Subcarrier group corresponding to the feedback information value of 1, where S represents the smallest subcarrier index in the RU. | Subcarrier group corresponding to the feedback information value of 1, where S represents the smallest subcarrier index in the RU. | Subcarrier group corresponding to the feedback information value of 1, where S represents the smallest subcarrier index in the RU. |
| 1 | S + 1, S + 5, S + 9, S + 13, S + 17, S + 21 | Same as 26-tone RU | Same as 26-tone RU |
| 2 | S + 2, S + 6, S + 10, S + 14, S + 18, S + 22 | | |
| 3 | S + 3, S + 7, S + 11, S + 15, S + 19, S + 23 | | |
| 4 | S + 4, S + 8, S + 12, S + 16, S + 20, S + 24 | | |
| 5 to 8 | None | Subcarrier indices in 26-tone RU are each incremented by 26. | Same as 52-tone RU |
| 9 to 12 | None | None | Subcarrier indices in 26-tone RU are each incremented by 52. |

In some embodiments, the subcarrier mapping of RU_TONE_SET_INDEX may also be one RU_TONE_SET_INDEX corresponding to every 5 or every 4 subcarriers, which can increase the number of stations that can participate in feedback each time.

In some embodiments, the subcarrier mapping of RU_TONE_SET_INDEX for the 52-tone RU and/or the 106-tone RU may also be different from that for the 26-tone RU, with each group of 6 subcarriers evenly distributed throughout the 52-tone RU and/or the 106-tone RU. For example, when RU_TONE_SET_INDEX is 1 in the 52-tone RU and the feedback information value is 1, the corresponding subcarrier group may be {S + 1, S + 9, S + 17, S + 25, S + 33, S + 41}.

In some embodiments, for the uplink transmission in which frequency-domain units for reporting buffer information of low-latency traffic has been reserved, the duration of the PPDU carrying the uplink data transmitted by the first STA is less than or equal to a predefined value.

In some embodiments, the predefined value is negatively correlated with the number of frequency-domain units reserved in the uplink transmission by the first STA for reporting low-latency traffic.

In some embodiments, the predefined value is 700 microseconds or 3400 microseconds.

For example, in the existing method where NFRP is performed before each transmission, there is an additional time consumption of approximately 180 microseconds. In the embodiments of the disclosure, there is no such additional time consumption. However, reserving subchannels in the uplink transmission reduces the bandwidth for data transmission, which increases the data transmission time. Therefore, in the embodiments of the disclosure, the time consumption is less than that of the existing solution when the duration of the PPDU for each data transmission is less than or equal to the predefined value (for example, 700 microseconds).

For example, in the existing method where NFRP is performed before each transmission, there is an additional time consumption of approximately 180 microseconds. In the embodiments of the disclosure, there is no such additional time consumption. However, reserving RUs in the uplink transmission reduces the bandwidth for data transmission, which increases the data transmission time. Therefore, in the embodiments of the disclosure, the time consumption is less than that of the existing solution when the duration of the PPDU for each data transmission is less than or equal to the predefined value (the fewer the reserved RUs, the larger the predefined value, for example, 3400 microseconds for a 26-tone RU and 700 microseconds for a 242-tone RU).

Therefore, in the embodiments of the disclosure, the first STA reserves m₁ frequency-domain units in the first uplink transmission. One or more other STAs with uplink low-latency traffic to be transmitted report the buffer information of the low-latency traffic on the m₁ frequency-domain units. Thus, the AP can obtain the buffer information of the uplink low-latency traffic from one or more other STAs in the contended TXOP of the first STA or the contended TXOP of the AP, thereby enabling timely transmission of event-driven uplink low-latency traffic.

The technical solution of the disclosure will be described in detail below through specific embodiments.

### Embodiment 1

When an STA performs uplink transmission, it may reserve at least one subchannel in its working bandwidth for other STAs to report buffer information of low-latency traffic (also referred to as low-latency data) to the AP. The AP may indicate the reserved subchannel in a beacon frame, and/or the AP may also indicate the reserved subchannel when initiating the latency-sensitive transmission prioritized mode, and/or the AP may also indicate the reserved subchannel in a trigger frame. The specific process is illustrated in FIG.24. Station 1 obtains a TXOP (i.e., by exchanging request to send (RTS) frame and clear to send (CTS) frame to obtain the TXOP). Station 1 reserves at least one subchannel during at least one uplink transmission with the access point. If at least one other station has pending uplink low-latency data before this uplink transmission, the other station may use the reserved subchannel to send an NDP feedback report during this uplink transmission, to indicate to the AP that the other station has pending uplink low-latency traffic to be transmitted and/or the specific data volume. After receiving the indication, the AP indicates in its response or acknowledgment to Station 1 that the AP will contend for the TXOP. Upon receiving the preemption indication, Station 1 will stop the uplink transmission. After the TXOP is contended, the AP will use the existing trigger frame-based uplink transmission process to trigger each station (including the other station and/or Station 1) to perform uplink transmission. As illustrated in FIG.24, the time interval between different frames is greater than or equal to the short interframe space (SIFS).

The uplink transmission between Station 1 and the AP may involve a data frame and/or a management frame. The NDP may adopt the HE TB feedback NDP format or a new NDP format defined in this disclosure. The response or acknowledgment from the AP to Station 1 may be a management frame and/or an Acknowledgment (Ack) frame and/or a Block Acknowledgment (BA) frame. A subchannel or RU will not be reserved in the uplink transmission triggered by the trigger frame sent by the AP to each station; alternatively, a new trigger frame defined in this disclosure may be used, which carries an indication of reserved subchannel or RU, meaning that a subchannel or RU is to be reserved in the uplink transmission triggered by this trigger frame.

In this scenario, there may be three methods for the other station to determine whether Station 1 has reserved a subchannel or not.

Method 1: Station 1 performs mode changing in advance (i.e., activates the low-latency transmission prioritized mode). The AP broadcasts in the beacon frame that Station 1 has activated the low-latency transmission prioritized mode (in this case, the mode changing of the first station takes effect after at least one beacon frame transmission). The specific subchannel reserved can be predefined or indicated in the beacon frame. After activating the low-latency transmission prioritized mode, Station 1 always reserves the subchannel in the TXOP it obtains.

Method 2: Station 1 performs mode changing in advance (i.e., activates the low-latency transmission prioritized mode). The AP sends a broadcast of a newly defined management frame to announce that Station 1 has activated the low-latency transmission prioritized mode. The specific subchannel reserved can be predefined, or indicated in the newly defined management frame. After activating the low-latency transmission prioritized mode, Station 1 always reserves the subchannel in the TXOP it obtains.

Method 3: Station 1 indicates in the RTS frame sent to the AP, for example, by setting the Individual/Group bit in the Receiver Address (RA) field of the frame to 1 to indicate that Station 1 has reserved a subchannel in this TXOP, and setting to 0 to indicate that Station 1 has not reserved a subchannel in this TXOP. The specific subchannel reserved can be predefined, or indicated by the AP in a previous beacon frame.

In the TXOP of Station 1, legacy STAs do not support the low-latency data volume reporting function, and will not transmit the NDP feedback.

In the TXOP of the first station, the AP receives the NDP feedback without sending an NFRP trigger frame, reducing the network load brought by the NFRP trigger frame.

### Embodiment 2

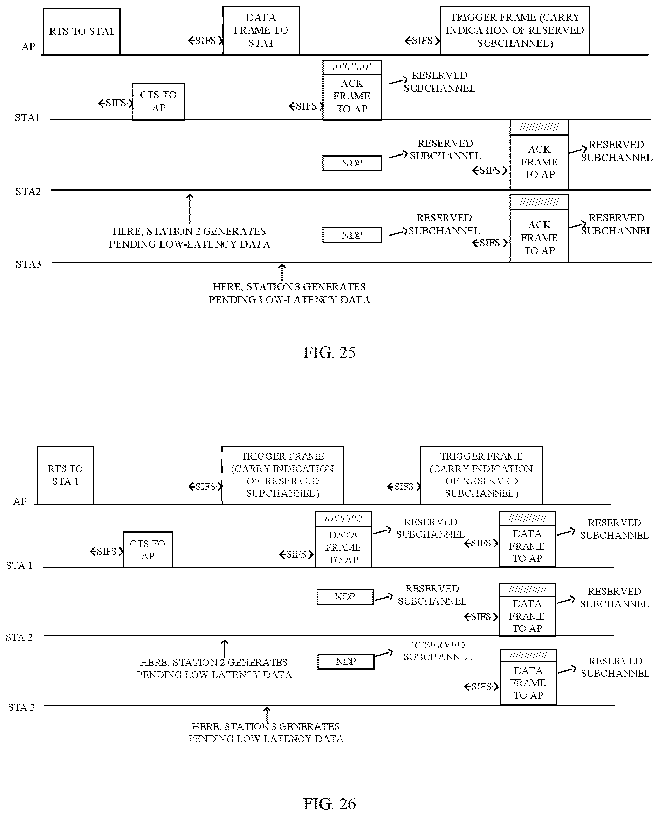

When an STA performs uplink transmission, it may reserve at least one subchannel in its working bandwidth for other STAs to report buffer information of low-latency traffic (also referred to as low-latency data) to the AP. The AP may indicate the reserved subchannel in a beacon frame, and/or the AP may also indicate the reserved subchannel when initiating latency-sensitive transmission prioritized mode, and/or the AP may also indicate the reserved subchannel in a trigger frame. The specific process is illustrated in FIG.25. The AP obtains a TXOP and performs at least one downlink transmission with Station 1. Station 1 reserves at least one subchannel when performs uplink response or acknowledgment to the AP. If at least one other station has pending uplink low-latency data before this uplink response or acknowledgment, the other station may use the reserved subchannel to send an NDP feedback report during this uplink response or acknowledgment, to indicate to the AP that the other station has uplink low-latency data to be transmitted and/or the specific data volume. After receiving the indication, the AP will use the trigger frame-based uplink transmission process to trigger each station (including the other station and/or Station 1) to perform uplink transmission.

The downlink transmission between the AP and Station 1 may involve a data frame and/or a management frame. The NDP may adopt the HE TB feedback NDP format or a new NDP format defined in this disclosure. The uplink response or acknowledgment from Station 1 may be a management frame and/or an Ack frame and/or a block Ack (BA) frame. A subchannel or RU will not be reserved in the uplink transmission triggered by the trigger frame sent by the AP to each station; alternatively, a new trigger frame defined in this disclosure may be used, which carries an indication of reserved subchannel or RU, meaning that a subchannel or RU is to be reserved in the uplink transmission triggered by this trigger frame.

In Embodiment 2, the method for the other station to determine whether Station 1 has reserved a subchannel or not is similar to that in Embodiment 1, with the difference being that in Method 3, the AP indicates in the RTS frame sent to Station 1.

### Embodiment 3

When an STA performs uplink transmission, it may reserve at least one subchannel in its working bandwidth for other STAs to report buffer information of low-latency traffic (also referred to as low-latency data) to the AP. The AP may indicate the reserved subchannel in a beacon frame, and/or the AP may also indicate the reserved subchannel when initiating latency-sensitive transmission prioritized mode, and/or the AP may also indicate the reserved subchannel in a trigger frame. The specific process is illustrated in FIG.26. The AP obtains a TXOP and triggers Station 1 to perform at least one uplink transmission. Station 1 reserves at least one subchannel during the uplink transmission. If at least one other station has pending uplink low-latency data before this uplink transmission, the other station may use the reserved subchannel to send an NDP feedback report during this uplink transmission, to indicate to the AP that the other station has uplink low-latency data to be transmitted and/or the specific data volume. After receiving the indication, the AP will use the trigger frame-based uplink transmission process to continue triggering each station (including the other station and/or Station 1) to perform uplink transmission.

When the AP triggers Station 1 to perform uplink transmission, it may use a trigger frame (i.e., a predefined or previously negotiated subchannel is to be reserved in the uplink transmission of Station 1), or it may use a new trigger frame defined in this disclosure to carry an indication of the reserved subchannel. The NDP may adopt the HE TB feedback NDP format or a new NDP format defined in this application. The uplink transmission of Station 1 may be a data frame and/or a management frame and/or an Ack frame and/or a Block Ack (BA) frame. No subchannel or RU will be reserved in the uplink transmission triggered by the trigger frame sent by the AP to each station; alternatively, a new trigger frame defined in this disclosure may be used, which carries an indication of the reserved subchannel or RU, meaning that a subchannel or RU is to be reserved in the uplink transmission triggered by this trigger frame.

In Embodiment 3, the method for the other station to determine whether Station 1 has reserved a subchannel or not is: indicate in a trigger frame from the AP, or similar to Method 3 in Embodiment 2, indicate in the RTS frame.

In the existing method where NFRP is performed before each transmission, there is an additional time consumption of approximately 180 microseconds. In this solution, there is no such additional time consumption. However, reserving a subchannel reduces the bandwidth for data transmission, which increases the data transmission time. Therefore, this solution has less time consumption than the existing solution when the duration of the PPDU for each data transmission is less than a predefined value (for example, 700 microseconds).

### Embodiment 4

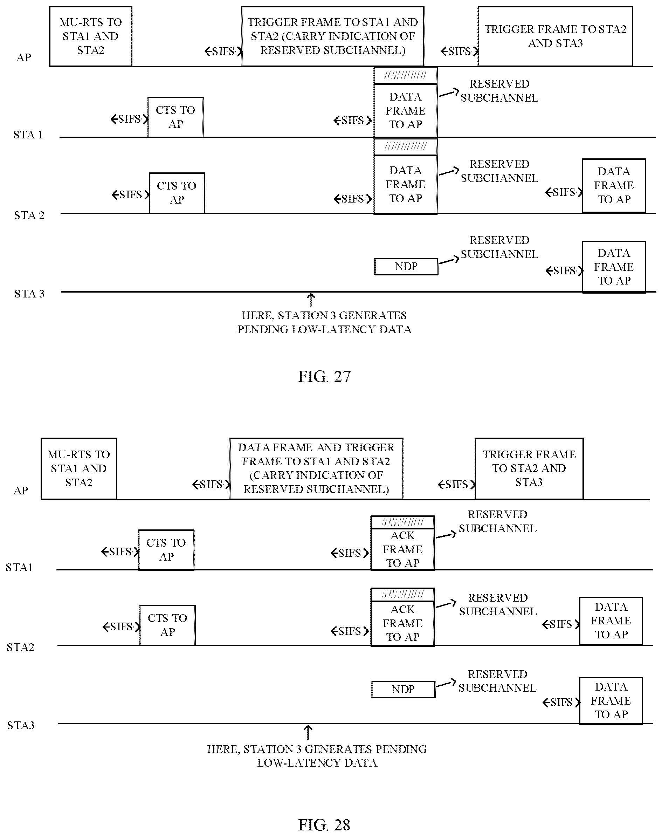

When an STA performs uplink transmission, it may reserve at least one subchannel in its working bandwidth for other STAs to report buffer information of low-latency traffic (also referred to as low-latency data) to the AP. The AP may indicate the reserved subchannel in a beacon frame, and/or the AP may also indicate the reserved subchannel when initiating latency-sensitive transmission prioritized mode, and/or the AP may also indicate the reserved subchannel in a trigger frame. The specific process is illustrated in FIG.27. Similar to Embodiment 3, after the AP obtains a TXOP, it triggers multiple first stations (i.e., Station 1 and Station 2 in FIG.27) to perform at least one uplink transmission.

In Embodiment 4, the method for the other station to determine whether the first station has reserved a subchannel or not is: indicate in trigger frame from the AP, or similar to Method 3 in Embodiment 2, indicate in a Multi-User RTS (MU-RTS) trigger frame.

### Embodiment 5

When an STA performs uplink transmission, it may reserve at least one subchannel in its working bandwidth for other STAs to report buffer information of low-latency traffic (also referred to as low-latency data) to the AP. The AP may indicate the reserved subchannel in a beacon frame, and/or the AP may also indicate the reserved subchannel when initiating latency-sensitive transmission prioritized mode, and/or the AP may also indicate the reserved subchannel in a trigger frame. Similar to Embodiment 4, after the AP obtains a TXOP, it performs at least one downlink transmission with at least one first station while triggering at least one second station to perform at least one uplink transmission, where the first station may be the same as or different from the second station. The specific process is illustrated in FIG.28. In Embodiment 5, the method for the other station to determine whether a subchannel has been reserved or not is the same as in Embodiment 4.

### Embodiment 6

When an STA performs uplink transmission, it may reserve at least one RU in its working bandwidth for other STAs to report buffer information of low-latency traffic (also referred to as low-latency data) to the AP. The AP may indicate the reserved RU in a beacon frame, and/or the AP may also indicate the reserved RU when initiating the low-latency transmission prioritized mode, and/or the AP may also indicate the reserved RU in a trigger frame.

Similar to Embodiment 1, the first station may use any PPDU format it supports other than the TB PPDU when performing uplink transmission with the AP. In this case, it is difficult for other stations to predict the preamble signal of the PPDU and cannot only use an RU that does not occupy a complete 20MHz subchannel to transmit the NDP. On the same 20MHz subchannel, if the transmitter sends different PPDU preambles, it will cause interference, preventing the receiver from correctly receiving the PPDU. Therefore, the method of reserving an RU is limited in this scenario and can only reserve an RU that occupies a complete 20MHz subchannel, which is essentially the same as reserving a subchannel.

Similar to Embodiment 2, the first station may use any PPDU format it supports other than the TB PPDU when performing uplink response or acknowledgment with the AP. For the same reason, the method of reserving an RU is limited in this scenario and can only reserve an RU that occupies a complete 20MHz subchannel, which is essentially the same as reserving a subchannel.

### Embodiment 7

When an STA performs uplink transmission, it may reserve at least one RU in its working bandwidth for other STAs to report buffer information of low-latency traffic (also referred to as low-latency data) to the AP. The AP may indicate the reserved resource unit in a beacon frame, and/or the AP may also indicate the reserved RU when initiating the low-latency transmission prioritized mode, and/or the AP may also indicate the reserved resource unit in a trigger frame.

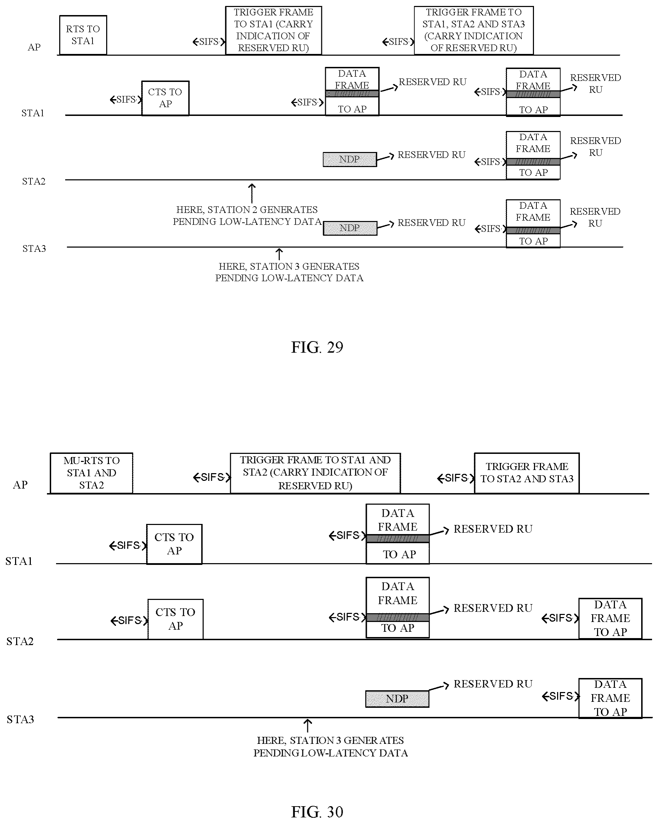

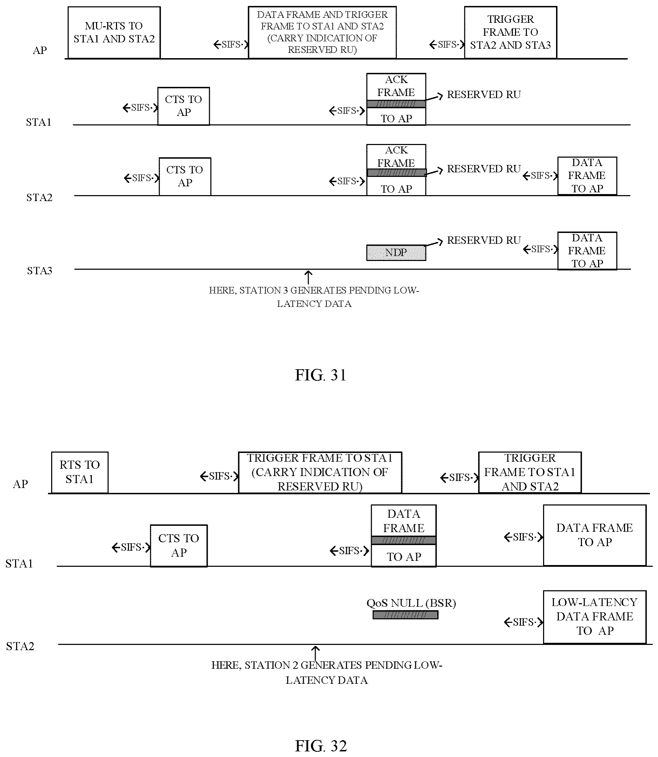

Similar to Embodiment 3, as illustrated in FIG.29; and/or similar to Embodiment 4, as illustrated in FIG.30; and/or similar to Embodiment 5, as illustrated in FIG.31. Specifically, it can be changed to reserving at least one RU in its working bandwidth. All stations can predict the preamble of the upcoming uplink TB PPDU by receiving the trigger frame sent by the AP. Therefore, the other stations can transmit NDPs using the same preamble on at least one RU without causing interference. However, the NDP needs to adopt the new NDP format defined in this disclosure because the HE TB feedback NDP format can only be transmitted on one or more complete 20MHz subchannels. When the reserved RU occupies a complete 20MHz subchannel, the HE TB feedback NDP format can be adopted.

In the existing method where NFRP is performed before each transmission, there is an additional time consumption of approximately 180 microseconds. In this solution, there is no such additional time consumption. However, reserving a RU reduces the bandwidth for data transmission, which increases the data transmission time. Therefore, this solution has less time consumption than the existing solution when the duration of the PPDU for each data transmission is less than a predefined value (the fewer the reserved resource units, the larger the predefined value, for example, 3400 microseconds for a 26-tone RU and 700 microseconds for a 242-tone RU).

### Embodiment 8

When an STA performs uplink transmission, it may reserve at least one RU in its working bandwidth for other STAs to report buffer information of low-latency traffic (also referred to as low-latency data) to the AP. The AP may indicate the reserved RU in a beacon frame, and/or the AP may also indicate the reserved RU when initiating the low-latency transmission prioritized mode, and/or the AP may also indicate the reserved RU in a trigger frame.

### Embodiment 9

Similar to Embodiment 8, as illustrated in FIG.32, other stations may also contend for the reserved RU using the UORA mechanism, to use a frame (e.g., QoS Null frame) carrying BSR information to report the buffer information of low-latency data. Although BSR information is more accurate than the information in NDP, UORA competition may fail. Therefore, this method is more advantageous when there are fewer stations in the BSS.

### Embodiment 10

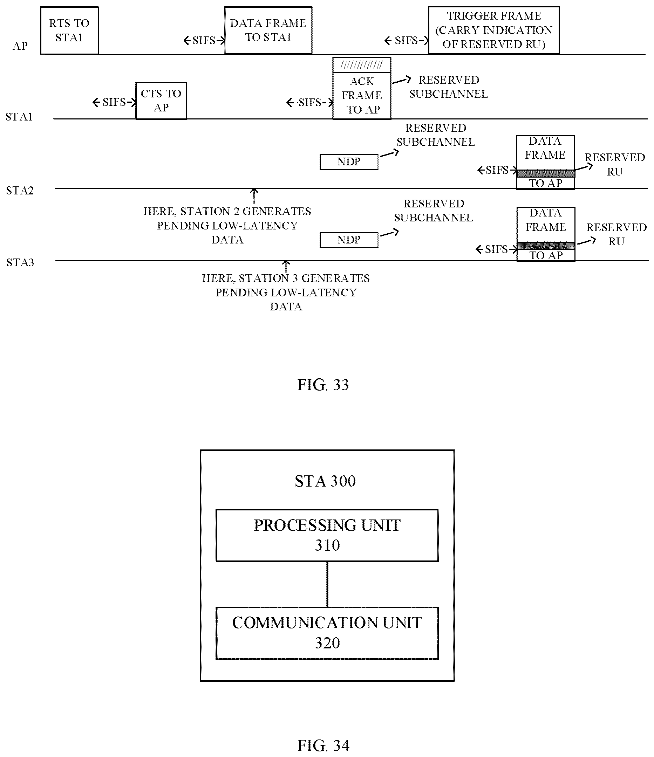

When an STA performs uplink transmission, it may reserve at least one subchannel and RU in its working bandwidth for other STAs to report buffer information of low-latency traffic (also referred to as low-latency data) to the AP. As illustrated in FIG.33, the AP may indicate the reserved subchannel in a beacon frame, and/or the AP may also indicate the reserved subchannel when initiating the low-latency transmission prioritized mode, and/or the AP may also indicate the reserved subchannel in a trigger frame. As illustrated in FIG.33, the AP may indicate the reserved RU through the trigger frame.

The above text, in conjunction with FIG. 8 to FIG. 33, describes in detail the method embodiments of the disclosure. The following text, in conjunction with FIG. 34 to FIG. 39, describes in detail the apparatus embodiments of the disclosure. It should be understood that the apparatus embodiments correspond to the method embodiments, and similar descriptions can refer to the method embodiments.

FIG.34 illustrates a schematic block diagram of a STA 300 according to an embodiment of the disclosure. The STA 300 is the first STA. As illustrated in FIG.34, the STA 300 includes: a processing unit 310, configured to reserve m₁ frequency-domain units in a first uplink transmission; where the m₁ frequency-domain units are used for one or more other STAs with pending uplink low-latency traffic to report buffer information of low-latency traffic, and m₁ is a positive integer.

In some embodiments, the frequency-domain units in the m₁ frequency-domain units are resource units (RUs); or the frequency-domain units in the m₁ frequency-domain units are subchannels.

In some embodiments, the first uplink transmission is an uplink transmission performed by the first STA after obtaining a TXOP; or the first uplink transmission is an uplink transmission performed by the first STA triggered by an AP after the AP obtain a TXOP; or the first uplink transmission is an uplink response or uplink acknowledgment to a downlink transmission performed by the AP after the AP obtain a TXOP.

In some embodiments, the STA 300 also includes a communication unit 320, which is configured to receive a first trigger frame before the first STA performs the first uplink transmission.

The first trigger frame includes a first field; the first field indicates to the first STA to reserve frequency-domain units for reporting buffer information of low-latency traffic in at least one uplink transmission, which includes the first uplink transmission; or the first field indicates to the first STA to reserve, in an uplink transmission in a first TXOP, frequency-domain units for reporting buffer information of low-latency traffic, where the first uplink transmission is the uplink transmission in the first TXOP.

In some embodiments, the first TXOP is a TXOP obtained by the first STA; or the first TXOP is a TXOP obtained by the AP.

In some embodiments, the first trigger frame also includes a second field; where the second field indicates information of frequency-domain units to be reserved by the first STA for reporting buffer information of low-latency traffic.

In some embodiments, the first trigger frame also includes a third field; where the third field indicates parameter information for the other STAs to perform NDP feedback.

In some embodiments, the parameter information for NDP feedback includes at least one of the following: Association Identifier (AID), starting AID, feedback type, uplink target receive power, number of spatially multiplexed users.

In some embodiments, the STA 300 also includes a communication unit 320. If the first uplink transmission is the uplink transmission performed by the first STA after obtaining a TXOP, and one or more other STAs report buffer information of low-latency traffic on the m₁ frequency-domain units, the communication unit 320 is configured to receive a preemption indication, where the preemption indication is used to indicate that the AP will contend for a TXOP obtained by the first STA.

In some embodiments, the preemption indication is carried by the Block Acknowledgment (BA) frame corresponding to the first uplink transmission, or the preemption indication is carried by a management frame.

In some embodiments, when the preemption indication is carried by the BA frame corresponding to the first uplink transmission, the Block Acknowledgment Control field in the BA frame corresponding to the first uplink transmission includes a field indicating that the AP will contend for the TXOP obtained by the first STA.

In some embodiments, the other STAs determine that the first STA has reserved, in the first uplink transmission, frequency-domain units for reporting buffer information of low-latency traffic, after learning that the first STA or AP has activated the latency-sensitive transmission prioritized mode.

In some embodiments, when the first STA has enabled the latency-sensitive transmission prioritized mode, the other STA learns through a beacon frame or management frame sent by the AP that the first STA has enabled the latency-sensitive transmission prioritized mode.

In some embodiments, the latency-sensitive transmission prioritized mode corresponding to the first STA is enabled based on a request from the AP, or the latency-sensitive transmission prioritized mode corresponding to the first STA is enabled by the first STA and notified to the AP.

In some embodiments, when the latency-sensitive transmission prioritized mode corresponding to the first STA is enabled based on a request from the AP, the duration of the latency-sensitive transmission prioritized mode corresponding to the first STA is configured by the AP in request information, and/or the m₁ frequency-domain units are configured by the AP in the request information.

In some embodiments, when the latency-sensitive transmission prioritized mode corresponding to the first STA is enabled by the first STA and notified to the AP, the duration of the latency-sensitive transmission prioritized mode corresponding to the first STA is indicated by the first STA in notification information, and/or the m₁ frequency-domain units are configured by the first STA in the notification information, and/or the m₁ frequency-domain units are configured by the AP in the notification response.

In some embodiments, when the AP has enabled the latency-sensitive transmission prioritized mode, the other STA learns that the AP has enabled the latency-sensitive transmission prioritized mode through at least one of the following frames sent by the AP: beacon frame, probe response frame, association response frame, re-association response frame, work mode declaration frame.

In some embodiments, when the AP indicates that it has enabled the latency-sensitive transmission prioritized mode, the AP also indicates at least one of the following: the duration of the latency-sensitive transmission prioritized mode corresponding to the AP, the m₁ frequency-domain units.

In some embodiments, the enabling and/or disabling of the latency-sensitive transmission prioritized mode corresponding to the AP is associated with the transmission information of low-latency traffic in the basic service set (BSS), or the enabling and/or disabling of the latency-sensitive transmission prioritized mode corresponding to the AP is set by user signaling.

In some embodiments, the other STA determines that the first STA has reserved, in each uplink transmission in the TXOP, frequency-domain units for reporting buffer information of low-latency traffic, after learning that the first STA has reserved, in the TXOP obtained by the first STA, frequency-domain units for reporting buffer information of low-latency traffic.

In some embodiments, the other STA learns, through an RTS frame sent by the first STA, that the first STA has reserved, in the TXOP obtained by the first STA, frequency-domain units for reporting the buffer information of low-latency traffic.

An Individual/Group bit in the Receiver Address (RA) of the RTS frame indicates whether the first STA has reserved in this TXOP frequency-domain units for reporting the buffer information of low-latency traffic.

In some embodiments, the other STA learns, through a second trigger frame sent by the AP, that the first STA has reserved in the first uplink transmission frequency-domain units for reporting buffer information of low-latency traffic.

In some embodiments, the second trigger frame includes a fourth field; the fourth field indicates that the first STA has reserved in at least one uplink transmission frequency-domain units for reporting the buffer information of low-latency traffic, the at least one uplink transmission includes the first uplink transmission; or the fourth field indicates that the first STA has reserved in an uplink transmission in the first TXOP frequency-domain units for reporting the buffer information of low-latency traffic, where the first uplink transmission is the uplink transmission in the first TXOP.

In some embodiments, the first TXOP is a TXOP obtained by the first STA; or the first TXOP is a TXOP obtained by the AP.

In some embodiments, the second trigger frame includes a fifth field; where the fifth field indicates information of the frequency-domain units reserved by the first STA for reporting the buffer information of low-latency traffic.

In some embodiments, the m₁ frequency-domain units are defined by the protocol, or the m₁ frequency-domain units are configured by the AP.

In some embodiments, the other STA reports buffer information of low-latency traffic on part or all of the m₁ frequency-domain units; or the other STA reports buffer information of low-latency traffic on available frequency-domain units in the m₁ frequency-domain units obtained through the UORA mechanism.

In some embodiments, when the other STA reports the buffer information of low-latency traffic on the available frequency-domain units in the m₁ frequency-domain units obtained through the UORA mechanism, the buffer information of low-latency traffic reported on the available frequency-domain units is carried by a QoS Null frame.

In some embodiments, the processing unit 310 is also configured to reserve m₂ frequency-domain units in the second uplink transmission; where the m₂ frequency-domain units are used for one or more other STAs with pending uplink low-latency traffic to report the buffer information of the low-latency traffic, and m₂ is a positive integer.

In some embodiments, frequency-domain units in the m₂ frequency-domain units are RUs; or the frequency-domain units in the m₂ frequency-domain units are subchannels.

In some embodiments, the frequency-domain units in the m₁ frequency-domain units are the same as the frequency-domain units in the m₂ frequency-domain units.

In some embodiments, the frequency-domain units in the m₁ frequency-domain units are different from the frequency-domain units in the m₂ frequency-domain units.

In some embodiments, one or more other STAs with more than x pending uplink low-latency traffic report buffer information of low-latency traffic through NDP or QoS Null frame, where x is 0 or a positive number.

In some embodiments, the value of x is defined by the protocol, or the value of x is configured or indicated by the AP in a beacon frame or trigger frame.

In some embodiments, when the other STA reports buffer information of low-latency traffic through NDP, the Tone Set Index or subcarrier set index used in the Ultra High Reliability Long Training field (UHR-LTF) of the NDP indicates the AID information of the STA sending the NDP.

In some embodiments, the AID information of each STA sending the NDP is associated with one Tone Set Index or one subcarrier set index.

In some embodiments, the bandwidth used in the UHR-LTF of the NDP is one of the following: 20MHz, 40MHz, 80MHz, 80+80MHz, 160MHz, 320MHz; or the bandwidth used in the UHR-LTF of the NDP is one of the following: 26 tones, 52 tones, 106 tones.

In some embodiments, each Tone Set Index corresponds to n1 subcarriers, where n1 = 4, 5, or 6; or, each subcarrier set index corresponds to n2 subcarriers, where n2 = 4, 5, or 6.

In some embodiments, for the uplink transmission in which frequency-domain units are reserved for reporting buffer information of low-latency traffic, the duration of the PPDU transmitted carrying uplink data transmitted by the first STA is less than or equal to a predefined value.

In some embodiments, the predefined value is negatively correlated with the number of frequency-domain units reserved in the uplink transmission by the first STA for reporting buffer information of low-latency traffic.

In some embodiments, the communication unit described above may be a communication interface or transceiver, or a communication chip or input/output interface of a system on chip. The processing unit described above may be one or more processors.

It should be understood that the STA 300 according to the embodiments of the disclosure corresponds to the first STA in the method embodiments of the disclosure, and the above described and other operations and/or functions of various units of the STA 300 are respectively for implementing the corresponding processes of the first STA in the method 200 illustrated in FIG.8. For brevity, the details are not repeated here.

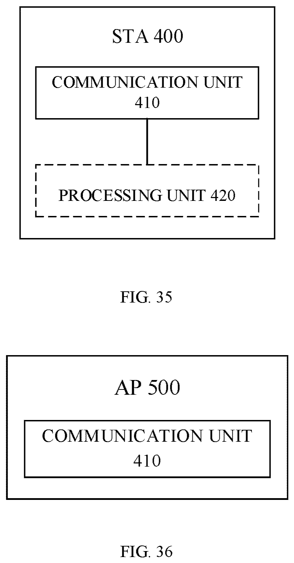

FIG.35 illustrates a schematic block diagram of a STA 400 according to an embodiment of the disclosure. The STA 400 is the second STA. As illustrated in FIG.35, the STA 400 includes: a communication unit 410, configured to report buffer information of low-latency traffic on m₁ frequency-domain units; where the m₁ frequency-domain units are frequency-domain units reserved by a first STA in a first uplink transmission, and m₁ is a positive integer.

In some embodiments, frequency-domain units in the m₁ frequency-domain units are RUs; or the frequency-domain units in the m₁ frequency-domain units are subchannels.

In some embodiments, the first uplink transmission is the uplink transmission performed by the first STA after obtaining a TXOP; or the first uplink transmission is an uplink transmission triggered by the AP after obtaining a TXOP; or the first uplink transmission is an uplink response or uplink acknowledgment to a downlink transmission performed by the AP after obtaining a TXOP.

In some embodiments, the STA 400 also includes a processing unit 420. Before the second STA reports the buffer information of low-latency traffic, the processing unit 420 is configured to determine that the first STA has reserved in the first uplink transmission frequency-domain units for reporting buffer information of low-latency traffic, after learning that the first STA or AP has enabled the latency-sensitive transmission prioritized mode.

In some embodiments, when the first STA has enabled the latency-sensitive transmission prioritized mode, the processing unit 420 is also configured to learn through a beacon frame or management frame sent by the AP that the first STA has enabled the latency-sensitive transmission prioritized mode.

In some embodiments, the latency-sensitive transmission prioritized mode corresponding to the first STA is enabled based on a request from the AP, or the latency-sensitive transmission prioritized mode corresponding to the first STA is enabled by the first STA and notified to the AP.

In some embodiments, when the latency-sensitive transmission prioritized mode corresponding to the first STA is enabled based on a request from the AP, the duration of the latency-sensitive transmission prioritized mode corresponding to the first STA is configured by the AP in the request information, and/or the m₁ frequency-domain units are configured by the AP in the request information.

In some embodiments, when the latency-sensitive transmission prioritized mode corresponding to the first STA is enabled by the first STA and notified to the AP, the duration of the latency-sensitive transmission prioritized mode corresponding to the first STA is indicated by the first STA in the notification information, and/or the m₁ frequency-domain units are configured by the first STA in the notification information, and/or the m₁ frequency-domain units are configured by the AP in the notification response.

In some embodiments, when the AP has enabled the latency-sensitive transmission prioritized mode, the processing unit 420 is also configured to learn through at least one of the following frames sent by the AP that the AP has enabled the latency-sensitive transmission prioritized mode: beacon frame, probe response frame, association response frame, re-association response frame, work mode declaration frame.

In some embodiments, when the AP indicates that it has enabled the latency-sensitive transmission prioritized mode, the AP also indicates at least one of the following: the duration of the latency-sensitive transmission prioritized mode corresponding to the AP, the m₁ frequency-domain units.

In some embodiments, the enabling and/or disabling of the latency-sensitive transmission prioritized mode corresponding to the AP is associated with the transmission information of low-latency traffic in the Basic Service Set (BSS), or the enabling and/or disabling of the latency-sensitive transmission prioritized mode corresponding to the AP is set by user signaling.

In some embodiments, the STA 400 also includes a processing unit 420. The processing unit 420 is configured to, before the second STA reports the buffer information of low-latency traffic, determine that the first STA has reserved in each uplink transmission in the TXOP frequency-domain units for reporting buffer information of low-latency traffic, after learning that the first STA has reserved frequency-domain units for reporting buffer information of low-latency traffic in the TXOP obtained by the first STA.

In some embodiments, the processing unit 420 is also configured to learn through an RTS frame sent by the first STA that the first STA has reserved in the contended TXOP of the first STA frequency-domain units for reporting buffer information of low-latency traffic.

Where an Individual/Group bit in the Receiver Address (RA) of the RTS frame indicates whether the first STA has reserved in this TXOP frequency-domain units for reporting buffer information of low-latency traffic.

In some embodiments, before the second STA reports the buffer information of low-latency traffic, the processing unit 420 is also configured to learn through a second trigger frame sent by the AP that the first STA has reserved in the first uplink transmission frequency-domain units for reporting buffer information of low-latency traffic.

In some embodiments, the second trigger frame includes a fourth field; the fourth field indicates that the first STA has reserved in at least one uplink transmission frequency-domain units for reporting buffer information of low-latency traffic, the at least one uplink transmission includes the first uplink transmission; or the fourth field indicates that the first STA has reserved in the uplink transmission in the first TXOP frequency-domain units for reporting buffer information of low-latency traffic, where the first uplink transmission is the uplink transmission in the first TXOP.

In some embodiments, the first TXOP is a TXOP obtained by the first STA; or the first TXOP is the TXOP obtained by the AP.

In some embodiments, the second trigger frame includes a fifth field; where the fifth field indicates information of the frequency-domain units reserved by the first STA for reporting buffer information of low-latency traffic.

In some embodiments, the m₁ frequency-domain units are defined by the protocol, or the m₁ frequency-domain units are configured by the AP.

In some embodiments, the communication unit 410 is specifically configured to: report buffer information of low-latency traffic on part or all of the m₁ frequency-domain units; or report buffer information of low-latency traffic on available frequency-domain units in the m₁ frequency-domain units obtained through the UORA mechanism.

In some embodiments, when the second STA reports the buffer information of low-latency traffic on the available frequency-domain units in the m₁ frequency-domain units obtained through the UORA mechanism, the buffer information of low-latency traffic reported on the available frequency-domain units is carried by a QoS Null frame.

In some embodiments, the communication unit 410 is also configured to report the buffer information of low-latency traffic on the m₂ frequency-domain units; wherein the m₂ frequency-domain units are the frequency-domain units reserved by the first STA in the second uplink transmission, and m₂ is a positive integer.

In some embodiments, frequency-domain units in the m₂ frequency-domain units are RUs; or the frequency-domain units in the m₂ frequency-domain units are subchannels.

In some embodiments, the frequency-domain units in the m₁ frequency-domain units are the same as the frequency-domain units in the m₂ frequency-domain units.

In some embodiments, the frequency-domain units in the m₁ frequency-domain units are different from the frequency-domain units in the m₂ frequency-domain units.

In some embodiments, when the number of pending uplink low-latency traffic exceeds x, the communication unit 410 is also configured to report the buffer information of low-latency traffic through NDP or QoS Null frame, where x is 0 or a positive number.

In some embodiments, the value of x is defined by the protocol, or the value of x is configured or indicated by the AP in a beacon frame or trigger frame.

In some embodiments, when the second STA reports buffer information of low-latency traffic through NDP, the Tone Set Index or Subcarrier Set Index used in the UHR-LTF of the NDP indicates the AID information of the STA.

In some embodiments, the AID information of each STA sending the NDP carrying the buffer information of low-latency traffic is associated with one Tone Set Index or Subcarrier Set Index.

In some embodiments, the bandwidth used in the UHR-LTF of the NDP is one of the following: 20MHz, 40MHz, 80MHz, 80+80MHz, 160MHz, 320MHz; or the bandwidth used in the UHR-LTF of the NDP is one of the following: 26 tones, 52 tones, 106 tones.

In some embodiments, each Tone Set Index corresponds to n₁ subcarriers, where n₁ = 4, 5, or 6; or each subcarrier set index corresponds to n₂ subcarriers, where n₂ = 4, 5, or 6.

In some embodiments, the communication unit described above may be a communication interface or transceiver, or a communication chip or input/output interface of a system on chip. The processing unit described above may be one or more processors.

It should be understood that the STA 400 according to the embodiments of the disclosure corresponds to the second STA in the method embodiments of the disclosure, and the above described and other operations and/or functions of the various units of the STA 400 are respectively for implementing the corresponding processes of the second STA in the method 200 illustrated in FIG.8. For brevity, the details are not repeated here.

FIG.36 illustrates a schematic block diagram of an AP 500 according to an embodiment of the disclosure. As illustrated in FIG.36, the AP 500 includes a communication unit 510, which is configured to receive the first uplink transmission from the first station (STA); where the first STA reserves m₁ frequency-domain units in the first uplink transmission, and the m₁ frequency-domain units are used for one or more other STAs with pending uplink low-latency traffic to report the buffer information of low-latency traffic, and m₁ is a positive integer.

In some embodiments, frequency-domain units in the m₁ frequency-domain units are resource units (RUs); or the frequency-domain units in the m₁ frequency-domain units are subchannels.

In some embodiments, the first uplink transmission is an uplink transmission performed by the first STA after obtaining a TXOP; or the first uplink transmission is an uplink transmission triggered by the AP after the AP obtains a TXOP; or the first uplink transmission is an uplink response or uplink acknowledgment to a downlink transmission performed by the AP after the AP obtains a TXOP.

In some embodiments, the communication unit 510 is also configured to send a first trigger frame to the first STA before the first uplink transmission; where the first trigger frame includes a first field; the first field indicates to the first STA to reserve in at least one uplink transmission frequency-domain units for reporting buffer information of low-latency traffic, the at least one uplink transmission includes the first uplink transmission; or the first field indicates to the first STA to reserve in an uplink transmission in the first TXOP frequency-domain units for reporting buffer information of low-latency traffic, where the first uplink transmission is the uplink transmission in the first TXOP.

In some embodiments, the first TXOP is a TXOP obtained by the first STA; or the first TXOP is a TXOP obtained by the AP.

In some embodiments, the first trigger frame also includes a second field; where the second field indicates information of frequency-domain units to be reserved by the first STA for reporting the buffer information of low-latency traffic.

In some embodiments, the first trigger frame also includes a third field; where the third field indicates parameter information for the other STA to perform NDP feedback.

In some embodiments, the parameter information for NDP feedback includes at least one of the following: Association Identifier (AID), starting AID, feedback type, uplink target receive power, number of spatially multiplexed users.

In some embodiments, if the first uplink transmission is the uplink transmission performed by the first STA after obtaining a TXOP, and one or more other STAs report buffer information of low-latency traffic on the m₁ frequency-domain units, the communication unit 510 is also configured to send a preemption indication to the first STA, where the preemption indication indicates that the AP will contend for a TXOP obtained by the first STA.

In some embodiments, the preemption indication is carried by a BA frame corresponding to the first uplink transmission, or the preemption indication is carried by a management frame.

In some embodiments, when the preemption indication is carried by the BA frame corresponding to the first uplink transmission, the Block Acknowledgment Control field in the BA frame corresponding to the first uplink transmission includes a field indicates that the AP will contend for a TXOP obtained by the first STA.

In some embodiments, the other STA determines that the first STA has reserved in the first uplink transmission frequency-domain units for reporting buffer information of low-latency traffic, after learning that the first STA or the AP has enabled the latency-sensitive transmission prioritized mode.

In some embodiments, when the first STA has enabled the latency-sensitive transmission prioritized mode, the other STA learns through a beacon frame or management frame sent by the AP that the first STA has enabled the latency-sensitive transmission prioritized mode.

In some embodiments, the latency-sensitive transmission prioritized mode corresponding to the first STA is enabled based on a request from the AP, or the latency-sensitive transmission prioritized mode corresponding to the first STA is enabled by the first STA and notified to the AP.

In some embodiments, when the latency-sensitive transmission prioritized mode corresponding to the first STA is enabled based on a request from the AP, the duration of the latency-sensitive transmission prioritized mode corresponding to the first STA is configured by the AP in request information, and/or the m₁ frequency-domain units are configured by the AP in the request information.

In some embodiments, when the latency-sensitive transmission prioritized mode corresponding to the first STA is enabled by the first STA and notified to the AP, the duration of the latency-sensitive transmission prioritized mode corresponding to the first STA is indicated by the first STA in notification information, and/or the m₁ frequency-domain units are configured by the first STA in the notification information, and/or the m₁ frequency-domain units are configured by the AP in the notification response.

In some embodiments, when the AP has enabled the latency-sensitive transmission prioritized mode, the other STA learns through at least one of the following frames sent by the AP that the AP has enabled the latency-sensitive transmission prioritized mode: beacon frame, probe response frame, association response frame, re-association response frame, work mode declaration frame.

In some embodiments, when the AP indicates that it has enabled the latency-sensitive transmission prioritized mode, the AP also indicates at least one of the following: the duration of the latency-sensitive transmission prioritized mode corresponding to the AP, the m₁ frequency-domain units.

In some embodiments, the enabling and/or disabling of the latency-sensitive transmission prioritized mode corresponding to the AP is associated with the transmission information of low-latency traffic in a BSS, or the enabling and/or disabling of the latency-sensitive transmission prioritized mode corresponding to the AP is set by user signaling.

In some embodiments, the communication unit 510 is also configured to send a second trigger frame, which is used to indicate that the first STA has reserved in the first uplink transmission frequency-domain units for reporting buffer information of low-latency traffic.

In some embodiments, the second trigger frame includes a fourth field; the fourth field indicates that the first STA has reserved in at least one uplink transmission frequency-domain units for reporting buffer information of low-latency traffic, which includes the first uplink transmission; or, the fourth field indicates that the first STA has reserved in an uplink transmission in the first TXOP frequency-domain units for reporting buffer information of low-latency traffic, where the first uplink transmission is the uplink transmission in the first TXOP.

In some embodiments, the first TXOP is a TXOP obtained by the first STA; or the first TXOP is a TXOP obtained by the AP.

In some embodiments, the second trigger frame includes a fifth field; where the fifth field indicates information of the frequency-domain units reserved by the first STA for reporting the buffer information of low-latency traffic.

In some embodiments, the m₁ frequency-domain units are defined by the protocol, or the m₁ frequency-domain units are configured by the AP.

In some embodiments, the communication unit 510 is also configured to receive buffer information of low-latency traffic reported by one or more other STAs on part or all of the m₁ frequency-domain units; or the communication unit 510 is also configured to receive buffer information of low-latency traffic reported by one or more other STAs on available frequency-domain units in the m₁ frequency-domain units obtained through the UORA mechanism.

In some embodiments, when the other STA reports buffer information of low-latency traffic on the available frequency-domain units in the m₁ frequency-domain units obtained through the UORA mechanism, the buffer information of low-latency traffic reported on the available frequency-domain units is carried by a QoS Null frame.

In some embodiments, the communication unit 510 is also configured to receive the second uplink transmission from the first STA; where the first STA reserves m₂ frequency-domain units in the second uplink transmission, and the m₂ frequency-domain units are used for one or more other STAs with pending uplink low-latency traffic to report the buffer information of the low-latency traffic, and m₂ is a positive integer.

In some embodiments, frequency-domain units in the m₂ frequency-domain units are RUs; or the frequency-domain units in the m₂ frequency-domain units are subchannels.

In some embodiments, the frequency-domain units in the m₁ frequency-domain units are the same as the frequency-domain units in the m₂ frequency-domain units.

In some embodiments, the frequency-domain units in the m₁ frequency-domain units are different from the frequency-domain units in the m₂ frequency-domain units.

In some embodiments, one or more other STAs with more than x pending uplink low-latency traffic report buffer information of low-latency traffic through NDP or QoS Null frame, where x is 0 or a positive number.

In some embodiments, the value of x is defined by the protocol, or the value of x is configured or indicated by the AP in a beacon frame or trigger frame.

In some embodiments, when the other STA reports buffer information of low-latency traffic through NDP, the Tone Set Index or Subcarrier Set Index used in the UHR-LTF of the NDP indicates the AID information of the STA sending the NDP.

In some embodiments, the AID information of each STA sending the NDP is associated with one Tone Set Index or one subcarrier set index.

In some embodiments, the bandwidth used in the UHR-LTF of the NDP is one of the following: 20MHz, 40MHz, 80MHz, 80+80MHz, 160MHz, 320MHz; or the bandwidth used in the UHR-LTF of the NDP is one of the following: 26 tones, 52 tones, 106 tones.

In some embodiments, each Tone Set Index corresponds to n1 subcarriers, where n₁ = 4, 5, or 6; or each subcarrier set index corresponds to n2 subcarriers, where n₂ = 4, 5, or 6.

In some embodiments, for an uplink transmission in which frequency-domain units for reporting buffer information of low-latency traffic are reserved, the duration of the PPDU carrying uplink data transmitted by the first STA is less than or equal to a predefined value.

In some embodiments, the predefined value is negatively correlated with the number of frequency-domain units reserved by the first STA for reporting buffer information of low-latency traffic in the uplink transmission.

In some embodiments, the communication unit described above may be a communication interface or transceiver, or a communication chip or input/output interface of a system on chip. The processing unit described above may be one or more processors.

It should be understood that the AP 500 according to the embodiments of the disclosure corresponds to the AP in the method embodiments of the disclosure, and above described and other operations and/or functions of the various units of the AP 500 are respectively for implementing the corresponding processes of the AP in the method 200 illustrated in FIG.8. For brevity, the details are not repeated here.

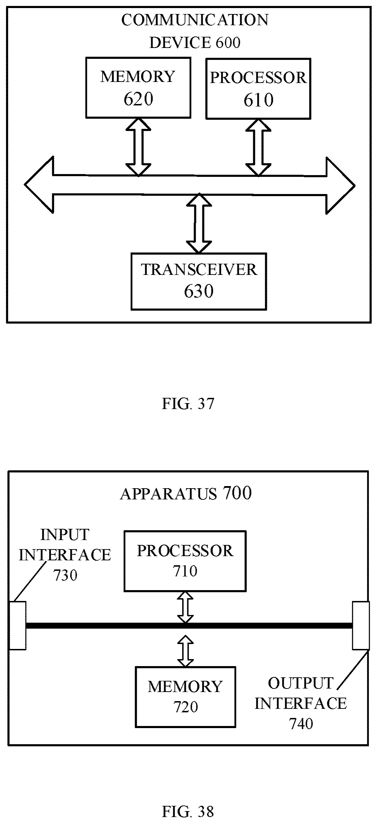

FIG.37 illustrates a schematic structure diagram of a communication device 600 according to an embodiment of the disclosure. As illustrated in FIG.37, the communication device 600 includes a processor 610, which can call and run computer programs from a memory to implement the methods of the disclosure.

In some embodiments, as illustrated in FIG.37, the communication device 600 may also include a memory 620. The processor 610 can call and run computer programs from the memory 620 to implement the methods of the disclosure.

The memory 620 may be a separate device independent of the processor 610, or it may be integrated into the processor 610.

In some embodiments, as illustrated in FIG.37, the communication device 600 may also include a transceiver 630. The processor 610 can control the transceiver 630 to communicate with other devices, specifically, to send information or data to other devices or receive information or data sent by other devices.

The transceiver 630 may include a transmitter and a receiver. The transceiver 630 may also further include an antenna, and the number of antennas may be one or more.

In some embodiments, the processor 610 may implement the function of the processing unit in the STA, or the processor 610 may implement the function of the processing unit in the AP. For brevity, the details are not repeated here.

In some embodiments, the transceiver 630 may implement the function of the communication unit in the STA. For brevity, the details are not repeated here.

In some embodiments, the transceiver 630 may implement the function of the communication unit in the AP. For brevity, the details are not repeated here.

In some embodiments, the communication device 600 may specifically be the AP of the disclosure, and the communication device 600 can implement the corresponding processes performed by the AP in the various methods of the disclosure. For brevity, the details are not repeated here.

In some embodiments, the communication device 600 may specifically be the STA of the disclosure, and the communication device 600 can implement the corresponding processes performed by the first STA or the second STA in the various methods of the disclosure. For brevity, the details are not repeated here.

FIG.38 illustrates a schematic structure diagram of an apparatus 700 according to an embodiment of the disclosure. As illustrated in FIG.38, the apparatus 700 includes a processor 710, which can call and run computer programs from a memory to implement the methods of the disclosure.

In some embodiments, as illustrated in FIG.38, the apparatus 700 may also include a memory 720. The processor 710 can call and run computer programs from the memory 720 to implement the methods of the disclosure.

The memory 720 may be a separate device independent of the processor 710, or it may be integrated into the processor 710.

In some embodiments, the processor 710 may implement the function of the processing unit in the STA, or the processor 710 may implement the function of the processing unit in the AP. For brevity, the details are not repeated here.

In some embodiments, the apparatus 700 may also include an input interface 730. The processor 710 can control the input interface 730 to communicate with other devices or chips, specifically, to obtain information or data sent by other devices or chips. Optionally, the processor 710 may be located inside or outside the chip.

In some embodiments, the input interface 730 may implement the function of the communication unit in the STA, or the input interface 730 may implement the function of the communication unit in the AP.

In some embodiments, the apparatus 700 may also include an output interface 740. The processor 710 can control the output interface 740 to communicate with other devices or chips, specifically, to output information or data to other devices or chips. Optionally, the processor 710 may be located inside or outside the chip.

In some embodiments, the output interface 740 may implement the function of the communication unit in the STA, or the output interface 740 may implement the function of the communication unit in the AP.

In some embodiments, the apparatus may be applied to the AP of the disclosure, and the apparatus can implement the corresponding processes performed by the AP in the various methods of the disclosure. For brevity, the details are not repeated here.

In some embodiments, the apparatus may be applied to the STA of the disclosure, and the apparatus can implement the corresponding processes performed by the first STA or the second STA in the various methods of the disclosure. For brevity, the details are not repeated here.

In some embodiments, the apparatus mentioned in the embodiments of the disclosure may also be a chip. For example, it may be a system-level chip, a system on chip, a chip system, or a system on chip, etc.

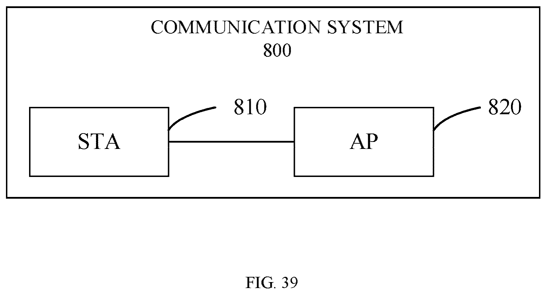

FIG.39 illustrates a schematic block diagram of a communication system 800 according to an embodiment of the disclosure. As illustrated in FIG.39, the communication system 800 includes a STA 810 and an AP 820.

The STA 810 may be used to implement the corresponding functions performed by the first STA or the second STA in the above methods, and the AP 820 may be used to implement the corresponding functions performed by the AP in the above methods. For brevity, the details are not repeated here.

It should be understood that the processor of the disclosure may be an integrated circuit chip that has the capability of processing signals. In the implementation process, the steps of the above method embodiments may be completed through the integrated logic circuit of hardware in the processor or through software instructions. The processor described above may be a general-purpose processor, a digital signal processor (DSP), an application-specific integrated circuit (ASIC), a field-programmable gate array (FPGA), or other programmable logic devices, discrete gate or transistor logic devices, discrete hardware components. It can implement or execute the methods, steps, and logical block diagrams disclosed in the disclosure. A general-purpose processor may be a microprocessor or any conventional processor, etc. The methods and steps disclosed in the disclosure may be directly embodied as being completed by hardware decoding processors, or completed by a combination of hardware and software modules in the decoding processors. The software modules may be located in mature storage media in the field, such as random access memory, flash memory, read-only memory, programmable read-only memory, erasable programmable read-only memory, electrically erasable programmable read-only memory, registers, etc. The storage media is located in the memory, and the processor reads the information in the memory and completes the steps of the above methods in combination with its hardware.

It should be understood that the memory mentioned in the disclosure is exemplary but not limited. For example, the memory in the embodiments of the disclosure may also be static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synchronous link dynamic random access memory (SLDRAM), and direct Rambus random access memory (DR RAM), etc. That is to say, the memory in the embodiments of the disclosure is intended to include but not be limited to these and any other suitable types of memory.

The disclosure also provides a computer-readable storage medium for storing computer programs.

In some embodiments, the computer-readable storage medium may be applied to the AP of the disclosure, and the computer program enables the computer to perform the corresponding processes performed by the AP in the various methods of the disclosure. For brevity, the details are not repeated here.

In some embodiments, the computer-readable storage medium may be applied to the STA of the disclosure, and the computer program enables the computer to perform the corresponding processes performed by the first STA or the second STA in the various methods of the disclosure. For brevity, the details are not repeated here.

The disclosure also provides a computer program product, which includes computer program instructions.

In some embodiments, the computer program product may be applied to the AP of the disclosure, and the computer program instructions enable the computer to perform the corresponding processes performed by the AP in the various methods of the disclosure. For brevity, the details are not repeated here.

In some embodiments, the computer program product may be applied to the STA of the disclosure, and the computer program instructions enable the computer to perform the corresponding processes performed by the first STA or the second STA in the various methods of the disclosure. For brevity, the details are not repeated here.

The disclosure also provides a computer program.

In some embodiments, the computer program may be applied to the AP of the disclosure, and when the computer program runs on a computer, it enables the computer to perform the corresponding processes performed by the AP in the various methods of the disclosure. For brevity, the details are not repeated here.

In some embodiments, the computer program may be applied to the STA of the disclosure, and when the computer program runs on a computer, it enables the computer to perform the corresponding processes performed by the first STA or the second STA in the various methods of the disclosure. For brevity, the details are not repeated here.

Ordinary technicians in the field can realize that the units and algorithm steps described in the embodiments disclosed in the present text can be implemented by electronic hardware, or by a combination of computer software and electronic hardware. Whether these functions are executed in hardware or software depends on the specific application and design constraints of the technical solution. Professionals can use different methods to implement the described functions for each specific application, but such implementation should not be considered beyond the scope of the disclosure.

Technicians in the relevant field can clearly understand that for the convenience of description and brevity, the specific working process of the above-described systems, apparatuses, and units can refer to the corresponding processes in the foregoing method embodiments, and will not be repeated here.

In the several embodiments provided in the disclosure, it should be understood that the disclosed systems, apparatuses, and methods can be implemented in other ways. For example, the apparatus embodiments described above are merely illustrative. The division of the units is only a logical function division, and there may be other division methods in actual implementation. For example, multiple units or components may be combined or integrated into another system, or some features may be omitted or not executed. Another point is that the coupling or direct coupling or communication connection displayed or discussed may be indirect coupling or communication connection through some interfaces, devices or units, and may be in the form of electrical, mechanical or other forms.

The units described as separate components may or may not be physically separate, and the components displayed as units may or may not be physical units, that is, they may be located in one place, or they may be distributed to multiple network units. Some or all of the units may be selected according to actual needs to achieve the purpose of the solution of the present embodiment.

In addition, in the various embodiments of the disclosure, each functional unit may be integrated into one processing unit, or each unit may exist separately physically, or two or more units may be integrated into one unit.

If the function is implemented in the form of a software functional unit and sold or used as an independent product, it can be stored in a computer-readable storage medium. In view of this, the technical solution of the disclosure, essentially or the part that makes contributions to the related art, or the part of the technical solution, can be embodied in the form of a software product. The computer software product is stored in a storage medium and includes several instructions to enable a computer device (which may be a personal computer, a server, or a network device, etc.) to execute all or part of the steps of the methods described in the various embodiments of the disclosure. The storage medium mentioned above includes: USB flash drives, mobile hard disks, read-only memory (ROM), random access memory (RAM), magnetic disks, optical discs, and various other media that can store program code.

The above are only specific embodiments of the disclosure, but the protection scope of the disclosure is not limited to this. Any changes or substitutions that can be easily thought of by those familiar with this technical field within the technical scope disclosed by the disclosure should be covered within the protection scope of the disclosure. Therefore, the protection scope of the disclosure should be subject to the protection scope of the claims.

## Claims

1. A method for wireless communication, comprising:
reserving, by a first station (STA), m₁ frequency-domain units in a first uplink transmission, wherein the m₁ frequency-domain units are used by one or more other STAs with pending uplink low-latency traffic to report buffer information of low-latency traffic, and m1 is a positive integer.

2. The method according to claim 1, wherein
frequency-domain units in the m₁ frequency-domain units are resource units (RUs); or
the frequency-domain units in the m₁ frequency-domain units are subchannels.

3. The method according to claim 1 or 2, wherein
the first uplink transmission is an uplink transmission performed by the first STA after obtaining a transmission opportunity (TXOP); or
the first uplink transmission is an uplink transmission performed by the first STA triggered by an access point (AP) after the AP obtains a TXOP; or
the first uplink transmission is an uplink response or uplink acknowledgment to a downlink transmission performed by the AP after the AP obtains a TXOP.

4. The method according to any one of claims 1 to 3, before the first STA performs the first uplink transmission, further comprising:
receiving, by the first STA, a first trigger frame, wherein the first trigger frame comprises a first field;
the first field indicates to the first STA to reserve in at least one uplink transmission frequency-domain units for reporting the buffer information of low-latency traffic, and the at least one uplink transmission comprises the first uplink transmission; or
the first field indicates to the first STA to reserve in an uplink transmission in a first TXOP frequency-domain units for reporting the buffer information of low-latency traffic, and the first uplink transmission is the uplink transmission in the first TXOP.

5. The method according to claim 4, wherein
the first TXOP is a TXOP obtained by the first STA; or
the first TXOP is a TXOP obtained by a AP.

6. The method according to claim 4 or 5, wherein
the first trigger frame further comprises a second field, wherein the second field indicates information of frequency-domain units to be reserved by the first STA for reporting the buffer information of low-latency traffic.

7. The method according to any one of claims 4 to 6, wherein
the first trigger frame further comprises a third field, wherein the third field indicates parameter information for the other STAs to perform null data physical protocol data unit (NDP) feedback.

8. The method according to claim 7, wherein
the parameter information for NDP feedback comprises at least one of: association identifier (AID), starting AID, feedback type, uplink target receive power, and number of spatially multiplexed users.

9. The method according to any one of claims 1 to 8, wherein in response to the first uplink transmission being an uplink transmission performed by the first STA after obtaining a TXOP, and the one or more other STAs have reported the buffer information of low-latency traffic on the m₁ frequency-domain units, the method further comprises:
receiving, by the first STA, preemption indication information, wherein the preemption indication information indicates that a AP will contend for a TXOP obtained by the first STA.

10. The method according to claim 9, wherein the preemption indication information is carried by a block acknowledgment (BA) frame corresponding to the first uplink transmission, or the preemption indication information is carried by a management frame.

11. The method according to claim 10, wherein in the case where the preemption indication information is carried by the block acknowledgment frame corresponding to the first uplink transmission, a block acknowledgment control field in the block acknowledgment frame corresponding to the first uplink transmission comprises a field indicating that the AP will contend for the TXOP obtained by the first STA.

12. The method according to any one of claims 1 to 11, wherein
the other STAs determine that the first STA has reserved in the first uplink transmission frequency-domain units for reporting the buffer information of low-latency traffic, after learning that the first STA or a AP has enabled a latency-sensitive transmission prioritized mode.

13. The method according to claim 12, wherein
in the case where the first STA has enabled the latency-sensitive transmission prioritized mode, the other STAs learn through a beacon frame or a management frame sent by the AP that the first STA has enabled the latency-sensitive transmission prioritized mode.

14. The method according to claim 13, wherein
the latency-sensitive transmission prioritized mode corresponding to the first STA is enabled based on a request from the AP, or the latency-sensitive transmission prioritized mode corresponding to the first STA is enabled by the first STA and notified to the AP.

15. The method according to claim 14, wherein in the case where the latency-sensitive transmission prioritized mode corresponding to the first STA is enabled based on the request from the AP, a duration of the latency-sensitive transmission prioritized mode corresponding to the first STA is configured by the AP in request information, and/or the m1 frequency-domain units are configured by the AP in the request information.

16. The method according to claim 14, wherein in the case where the latency-sensitive transmission prioritized mode corresponding to the first STA is enabled by the first STA and notified to the AP, a duration of the latency-sensitive transmission prioritized mode corresponding to the first STA is indicated by the first STA in notification information, and/or the m₁ frequency-domain units are configured by the first STA in the notification information, and/or the m₁ frequency-domain units are configured by the AP in a notification response.

17. The method according to claim 12, wherein in the case where the AP has enabled the latency-sensitive transmission prioritized mode, the other STAs learn that the AP has enabled the latency-sensitive transmission prioritized mode through at least one of the following frames sent by the AP: a beacon frame, a probe response frame, an association response frame, a reassociation response frame, and an operation mode notification frame.

18. The method according to claim 17, wherein the AP indicates at least one of the following while indicating that the AP has enabled the latency-sensitive transmission prioritized mode: a duration of the latency-sensitive transmission prioritized mode corresponding to the AP, the m₁ frequency-domain units.

19. The method according to claim 17 or 18, wherein enabling and/or disabling of the latency-sensitive transmission prioritized mode corresponding to the AP is associated with transmission information of low-latency traffic in a basic service set (BSS), or enabling and/or disabling of the latency-sensitive transmission prioritized mode corresponding to the AP is set via user signaling.

20. The method according to any one of claims 1 to 11, wherein the other STAs determine that the first STA has reserved, in each uplink transmission in a contended TXOP of the first STA, frequency-domain units for reporting the buffer information of low-latency traffic, after learning that the first STA has reserved, in the contended TXOP of the first STA, frequency-domain units for reporting the buffer information of low-latency traffic.

21. The method according to claim 20, wherein the other STAs learn, through a request to send (RTS) frame sent by the first STA, that the first STA has reserved, in the contended TXOP of the first STA, frequency-domain units for reporting the buffer information of low-latency traffic;
wherein an individual/group bit in a receiver address (RA) of the RTS frame indicates whether the first STA has reserved in a current TXOP frequency-domain units for reporting the buffer information of low-latency traffic.

22. The method according to any one of claims 1 to 11, wherein the other STAs learn, through a second trigger frame sent by a AP, that the first STA has reserved in the first uplink transmission frequency-domain units for reporting the buffer information of low-latency traffic.

23. The method according to claim 22, wherein
the second trigger frame comprises a fourth field;
the fourth field indicates that the first STA has reserved in at least one uplink transmission frequency-domain units for reporting the buffer information of low-latency traffic, and the at least one uplink transmission comprises the first uplink transmission; or
the fourth field indicates that the first STA has reserved in an uplink transmission in the first TXOP frequency-domain units for reporting the buffer information of low-latency traffic, and the first uplink transmission is the uplink transmission in the first TXOP.

24. The method according to claim 23, wherein
the first TXOP is a TXOP obtained by the first STA; or
the first TXOP is a TXOP obtained by the AP.

25. The method according to any one of claims 22 to 24, wherein
the second trigger frame comprises a fifth field; wherein the fifth field indicates information of the frequency-domain units reserved by the first STA for reporting the buffer information of low-latency traffic.

26. The method according to any one of claims 1 to 25, wherein
the m₁ frequency-domain units are specified in a protocol, or the m₁ frequency-domain units are configured by a AP.

27. The method according to any one of claims 1 to 26, wherein
the buffer information of low-latency traffic is reported by the other STAs by using part or all of the m₁ frequency-domain units; or the buffer information of low-latency traffic is reported by the other STAs on available frequency-domain units among the m₁ frequency-domain units obtained based on an uplink orthogonal frequency division multiple access (UORA) mechanism.

28. The method according to claim 27, wherein
in the case where the buffer information of low-latency traffic is reported by the other STAs on the available frequency-domain units among the m₁ frequency-domain units obtained based on the UORA mechanism, the buffer information of low-latency traffic reported on the available frequency-domain units is carried by a quality of service (QoS) null frame.

29. The method according to any one of claims 1 to 28, further comprising:
reserving, by the first STA, m₂ frequency-domain units in a second uplink transmission;
wherein the m₂ frequency-domain units are used by the one or more of other STAs with pending uplink low-latency traffic to report the buffer information of low-latency traffic, and m₂ is a positive integer.

30. The method according to claim 29, wherein
frequency-domain units in the m₂ frequency-domain units are RUs; or
the frequency-domain units in the m2 frequency-domain units are subchannels.

31. The method according to claim 29 or 30, wherein
frequency-domain units in the m₁ frequency-domain units are the same as frequency-domain units in the m₂ frequency-domain units.

32. The method according to claim 29 or 30, wherein
frequency-domain units in the m₁ frequency-domain units are different from frequency-domain units in the m₂ frequency-domain units.

33. The method according to any one of claims 1 to 32, wherein
one or more of other STAs with more than x pending uplink low-latency traffic report the buffer information of low-latency traffic through an NDP or a QoS null frame, wherein x is 0 or a positive number.

34. The method according to claim 33, wherein
the value of x is specified in a protocol, or the value of x is configured or indicated by a AP in a beacon frame or trigger frame.

35. The method according to claim 33 or 34, wherein in the case where the other STAs report the buffer information of low-latency traffic through the NDP, a tone set index or subcarrier set index used in an Ultra-High Reliability Long Training field (UHR-LTF) of the NDP indicates AID information of a STA sending the NDP.

36. The method according to claim 35, wherein the AID information of each STA sending the NDP is associated with one tone set index or one subcarrier set index.

37. The method according to claim 35 or 36, wherein
a bandwidth used by the UHR-LTF of the NDP is one of the following: 20MHz, 40MHz, 80MHz, 80+80MHz, 160MHz, 320MHz; or
a bandwidth used by the UHR-LTF of the NDP is one of the following: 26 tones, 52 tones, 106 tones.

38. The method according to any one of claims 35 to 37, wherein
each tone set index corresponds to n₁ subcarriers, wherein n₁=4, 5 or 6; or
each subcarrier set index corresponds to n₂ subcarriers, wherein n₂=4, 5 or 6.

39. The method according to any one of claims 1 to 38, wherein
for an uplink transmission in which frequency-domain units are reserved for reporting the buffer information of low-latency traffic, a duration of a physical layer protocol data unit (PPDU) carrying uplink data transmitted by the first STA is less than or equal to a predefined value.

40. The method according to claim 39, wherein the predefined value is negatively correlated with the number of frequency-domain units reserved in the uplink transmission by the first STA for reporting the buffer information of low-latency traffic.

41. A method for wireless communication, comprising:
reporting, by a second station (STA), buffer information of low-latency traffic on m₁ frequency-domain units;
wherein the m₁ frequency-domain units are frequency-domain units reserved by a first STA in a first uplink transmission, and m₁ is a positive integer.

42. The method according to claim 41, wherein
frequency-domain units in the m₁ frequency-domain units are resource units (RUs); or
the frequency-domain units in the m₁ frequency-domain units are subchannels.

43. The method according to claim 41 or 42, wherein
the first uplink transmission is an uplink transmission performed by the first STA after obtaining a transmission opportunity (TXOP); or
the first uplink transmission is an uplink transmission performed by the first STA triggered by an access point (AP) after the AP obtains a TXOP; or
the first uplink transmission is an uplink response or uplink acknowledgment to a downlink transmission performed by the AP after the AP obtains a TXOP.

44. The method according to any one of claims 41 to 43, wherein before the second STA reports the buffer information of low-latency traffic, the method further comprises:
determining, by the second STA, that the first STA has reserved in the first uplink transmission frequency-domain units for reporting the buffer information of low-latency traffic, after learning that the first STA or a AP has enabled a latency-sensitive transmission prioritized mode.

45. The method according to claim 44, further comprising:
in the case where the first STA has enabled the latency-sensitive transmission prioritized mode, the second STA learns through a beacon frame or management frame sent by the AP that the first STA has enabled the latency-sensitive transmission prioritized mode.

46. The method according to claim 45, wherein the latency-sensitive transmission prioritized mode corresponding to the first STA is enabled based on a request from the AP, or the latency-sensitive transmission prioritized mode corresponding to the first STA is enabled by the first STA and notified to the AP.

47. The method according to claim 46, wherein in the case where the latency-sensitive transmission prioritized mode corresponding to the first STA is enabled based on a request from the AP, a duration of the latency-sensitive transmission prioritized mode corresponding to the first STA is configured by the AP in request information, and/or the m₁ frequency-domain units are configured by the AP in the request information.

48. The method according to claim 46, wherein in the case where the latency-sensitive transmission prioritized mode corresponding to the first STA is enabled by the first STA and notified to the AP, a duration of the latency-sensitive transmission prioritized mode corresponding to the first STA is indicated by the first STA in notification information, and/or the m₁ frequency-domain units are configured by the first STA in the notification information, and/or the m₁ frequency-domain units are configured by the AP in a notification response.

49. The method according to claim 44, wherein in the case where the AP has enabled the latency-sensitive transmission prioritized mode, the second STA learns through at least one of the following frames sent by the AP that the AP has enabled the latency-sensitive transmission prioritized mode: a beacon frame, a probe response frame, an association response frame, a reassociation response frame, and an operation mode notification frame.

50. The method according to claim 49, wherein the AP indicates at least one of the following while indicating that the AP has enabled the latency-sensitive transmission prioritized mode: a duration of the latency-sensitive transmission prioritized mode corresponding to the AP, the m₁ frequency-domain units.

51. The method according to claim 49 or 50, wherein enabling and/or disabling of the latency-sensitive transmission prioritized mode corresponding to the AP is associated with transmission information of low-latency traffic in a basic service set (BSS), or enabling and/or disabling of the latency-sensitive transmission prioritized mode corresponding to the AP is set via user signaling.

52. The method according to any one of claims 41 to 43, wherein before the second STA reports the buffer information of low-latency traffic, the method further comprises:
determining, by the second STA, that the first STA has reserved, in each uplink transmission in a contended TXOP of the first STA, frequency-domain units for reporting the buffer information of low-latency traffic, after learning that the first STA has reserved frequency-domain units for reporting the buffer information of low-latency traffic in the contended TXOP of the first STA.

53. The method according to claim 52, further comprising:
the second STA learns through a request to send (RTS) frame sent by the first STA that the first STA has reserved in the contended TXOP of the first STA frequency-domain units for reporting the buffer information of low-latency traffic;
wherein an Individual/Group bit in a receiver address (RA) of the RTS frame indicates whether the first STA has reserved in a current TXOP frequency-domain units for reporting the buffer information of low-latency traffic.

54. The method according to any one of claims 41 to 43, wherein before the second STA reports the buffer information of low-latency traffic, the method further comprises:
the second STA learns, through a second trigger frame sent by a AP, that the first STA has reserved in the first uplink transmission frequency-domain units for reporting the buffer information of low-latency traffic.

55. The method according to claim 54, wherein
the second trigger frame comprises a fourth field;
the fourth field indicates that the first STA has reserved in at least one uplink transmission frequency-domain units for reporting the buffer information of low-latency traffic, and the at least one uplink transmission comprises the first uplink transmission; or
the fourth field indicates that the first STA has reserved in an uplink transmission in the first TXOP frequency-domain units for reporting the buffer information of low-latency traffic, and the first uplink transmission is the uplink transmission in the first TXOP.

56. The method according to claim 55, wherein
the first TXOP is a TXOP obtained by the first STA; or
the first TXOP is a TXOP obtained by the AP.

57. The method according to any one of claims 54 to 56, wherein
the second trigger frame comprises a fifth field; wherein the fifth field indicates information of the frequency-domain units reserved by the first STA for reporting the buffer information of low-latency traffic.

58. The method according to any one of claims 41 to 57, wherein
the m₁ frequency-domain units are specified in a protocol, or the m₁ frequency-domain units are configured by a AP.

59. The method according to any one of claims 41 to 58, wherein reporting, by the second STA, the buffer information of low-latency traffic on the m₁ frequency-domain units comprises:
reporting, by the second STA, the buffer information of low-latency traffic on part or all of the m₁ frequency-domain units; or
reporting, by the second STA, the buffer information of low-latency traffic on available frequency-domain units among the m₁ frequency-domain units obtained based on an uplink orthogonal frequency division multiple access (UORA) mechanism.

60. The method according to claim 59, wherein
in the case where the second STA reports the buffer information of low-latency traffic on the available frequency-domain units among the m₁ frequency-domain units obtained based on the UORA mechanism, the buffer information of low-latency traffic reported on the available frequency-domain units is carried by a quality of service (QoS) null frame.

61. The method according to any one of claims 41 to 60, further comprising:
reporting, by the second STA, the buffer information of low-latency traffic on m₂ frequency-domain units;
wherein the m₂ frequency-domain units are frequency-domain units reserved by the first STA in a second uplink transmission, and m₂ is a positive integer.

62. The method according to claim 61, wherein
frequency-domain units in the m₂ frequency-domain units are RUs; or
the frequency-domain units in the m₂ frequency-domain units are subchannels.

63. The method according to claim 61 or 62, wherein
frequency-domain units in the m₁ frequency-domain units are the same as frequency-domain units in the m₂ frequency-domain units.

64. The method according to claim 61 or 62, wherein
frequency-domain units in the m₁ frequency-domain units are different from frequency-domain units in the m₂ frequency-domain units.

65. The method according to any one of claims 41 to 64, wherein
in the case where the number of pending uplink low-latency traffic exceeds x, the second STA reports the buffer information of low-latency traffic through a null data physical protocol data unit (NDP) or a QoS null frame, wherein x is 0 or a positive number.

66. The method according to claim 65, wherein
the value of x is specified in a protocol, or the value of x is configured or indicated by a AP in a beacon frame or trigger frame.

67. The method according to claim 65 or 66, wherein
in the case where the second STA reports the buffer information of low-latency traffic through the NDP, a tone set index or subcarrier set index used in an Ultra-High Reliability Long Training field (UHR-LTF) of the NDP indicates AID information of the second STA.

68. The method according to claim 67, wherein the AID information of each STA sending the NDP carrying the buffer information of low-latency traffic is associated with one tone set index or one subcarrier set index.

69. The method according to claim 67 or 68, wherein
a bandwidth used by the UHR-LTF of the NDP is one of the following: 20MHz, 40MHz, 80MHz, 80+80MHz, 160MHz, 320MHz; or
a bandwidth used by the UHR-LTF of the NDP is one of the following: 26 tones, 52 tones, 106 tones.

70. The method according to any one of claims 67 to 69, wherein
each tone set index corresponds to n₁ subcarriers, wherein n₁=4, 5 or 6; or
each subcarrier set index corresponds to n₂ subcarriers, wherein n₂=4, 5 or 6.

71. A method for wireless communication, comprising:
receiving, by an access point (AP), a first uplink transmission from a first station (STA);
wherein the first STA has reserved m₁ frequency-domain units in the first uplink transmission, and the m₁ frequency-domain units are used by one or more other STAs with pending uplink low-latency traffic to report buffer information of low-latency traffic, and m₁ is a positive integer.

72. The method according to claim 71, wherein
frequency-domain units in the m₁ frequency-domain units are resource units (RUs); or
the frequency-domain units in the m₁ frequency-domain units are subchannels.

73. The method according to claim 71 or 72, wherein
the first uplink transmission is an uplink transmission performed by the first STA after obtaining a transmission opportunity (TXOP); or
the first uplink transmission is an uplink transmission performed by the first STA triggered by an access point (AP) after the AP obtains a TXOP; or
the first uplink transmission is an uplink response or uplink acknowledgment to a downlink transmission performed by the AP after the AP obtains a TXOP.

74. The method according to any one of claims 71 to 73, wherein before the first uplink transmission, the method further comprises:
sending, by the AP, a first trigger frame to the first STA;
wherein the first trigger frame comprises a first field;
the first field indicates to the first STA to reserve in at least one uplink transmission frequency-domain units for reporting the buffer information of low-latency traffic, and the at least one uplink transmission comprises the first uplink transmission; or
the first field indicates to the first STA to reserve in an uplink transmission in a first TXOP frequency-domain units for reporting the buffer information of low-latency traffic, and the first uplink transmission is the uplink transmission in the first TXOP.

75. The method according to claim 74, wherein
the first TXOP is a TXOP obtained by the first STA; or
the first TXOP is a TXOP obtained by a AP.

76. The method according to claim 74 or 75, wherein
the first trigger frame further comprises a second field, wherein the second field indicates information of frequency-domain units to be reserved by the first STA for reporting the buffer information of low-latency traffic.

77. The method according to any one of claims 74 to 76, wherein
the first trigger frame further comprises a third field, wherein the third field indicates parameter information for the other STAs to perform null data physical protocol data unit (NDP) feedback.

78. The method according to claim 77, wherein
the parameter information for NDP feedback comprises at least one of: association identifier (AID), starting AID, feedback type, uplink target receive power, and number of spatially multiplexed users.

79. The method according to any one of claims 71 to 78, wherein in response to the first uplink transmission being an uplink transmission performed by the first STA after obtaining a TXOP, and the one or more other STAs have reported the buffer information of low-latency traffic on the m₁ frequency-domain units, the method further comprises:
sending, by the AP, preemption indication information to the first STA, wherein the preemption indication information indicates that the AP will contend for a TXOP obtained by the first STA.

80. The method according to claim 79, wherein the preemption indication information is carried by a block acknowledgment frame corresponding to the first uplink transmission, or the preemption indication information is carried by a management frame.

81. The method according to claim 80, wherein in the case where the preemption indication information is carried by the block acknowledgment frame corresponding to the first uplink transmission, a Block Acknowledgment Control field in the block acknowledgment frame corresponding to the first uplink transmission comprises a field indicating that the AP will contend for the TXOP obtained by the first STA.

82. The method according to any one of claims 71 to 81, wherein
the other STAs determine that the first STA has reserved in the first uplink transmission frequency-domain units for reporting the buffer information of low-latency traffic, after learning that the first STA or the AP has enabled a latency-sensitive transmission prioritized mode.

83. The method according to claim 82, wherein
in the case where the first STA has enabled the latency-sensitive transmission prioritized mode, the other STAs learn through a beacon frame or a management frame sent by the AP that the first STA has enabled the latency-sensitive transmission prioritized mode

84. The method according to claim 83, wherein
the latency-sensitive transmission prioritized mode corresponding to the first STA is enabled based on a request from the AP, or the latency-sensitive transmission prioritized mode corresponding to the first STA is enabled by the first STA and notified to the AP.

85. The method according to claim 84, wherein
wherein in the case where the latency-sensitive transmission prioritized mode corresponding to the first STA is enabled based on the request from the AP, a duration of the latency-sensitive transmission prioritized mode corresponding to the first STA is configured by the AP in request information, and/or the m₁ frequency-domain units are configured by the AP in the request information.

86. The method according to claim 84, wherein in the case where the latency-sensitive transmission prioritized mode corresponding to the first STA is enabled by the first STA and notified to the AP, a duration of the latency-sensitive transmission prioritized mode corresponding to the first STA is indicated by the first STA in notification information, and/or the m₁ frequency-domain units are configured by the first STA in the notification information, and/or the m₁ frequency-domain units are configured by the AP in a notification response.

87. The method according to claim 82, wherein in the case where the AP has enabled the latency-sensitive transmission prioritized mode, the other STAs learn that the AP has enabled the latency-sensitive transmission prioritized mode through at least one of the following frames sent by the AP: a beacon frame, a probe response frame, an association response frame, a reassociation response frame, and an operation mode notification frame.

88. The method according to claim 87, wherein the AP indicates at least one of the following while indicating that the AP has enabled the latency-sensitive transmission prioritized mode: a duration of the latency-sensitive transmission prioritized mode corresponding to the AP, the m₁ frequency-domain units.

89. The method according to claim 87 or 88, wherein enabling and/or disabling of the latency-sensitive transmission prioritized mode corresponding to the AP is associated with transmission information of low-latency traffic in a basic service set (BSS), or enabling and/or disabling of the latency-sensitive transmission prioritized mode corresponding to the AP is set via user signaling.

90. The method according to any one of claims 71 to 81, further comprising:
sending, by the AP, a second trigger frame, the second trigger frame indicates that the first STA has reserved frequency-domain units for reporting the buffer information of low-latency traffic in the first uplink transmission.

91. The method according to claim 90, wherein
the second trigger frame comprises a fourth field;
the fourth field indicates that the first STA has reserved in at least one uplink transmission frequency-domain units for reporting the buffer information of low-latency traffic, and the at least one uplink transmission comprises the first uplink transmission; or
the fourth field indicates that the first STA has reserved in an uplink transmission in the first TXOP frequency-domain units for reporting the buffer information of low-latency traffic, and the first uplink transmission is the uplink transmission in the first TXOP.

92. The method according to claim 91, wherein
the first TXOP is a TXOP obtained by the first STA; or
the first TXOP is a TXOP obtained by the AP.

93. The method according to any one of claims 90 to 92, wherein
the second trigger frame comprises a fifth field; wherein the fifth field indicates information of the frequency-domain units reserved by the first STA for reporting the buffer information of low-latency traffic.

94. The method according to any one of claims 71 to 93, wherein
the m₁ frequency-domain units are specified in a protocol, or the m₁ frequency-domain units are configured by the AP

95. The method according to any one of claims 71 to 94, further comprising:
receiving, by the AP, the buffer information of low-latency traffic reported by one or more other STAs on part or all of the m₁ frequency-domain units; or
receiving, by the AP, the buffer information of low-latency traffic reported by one or more other STAs on available frequency-domain units among the m₁ frequency-domain units obtained based on an uplink orthogonal frequency division multiple access (UORA) mechanism.

96. The method according to claim 95, wherein
in the case where the buffer information of low-latency traffic is reported by the other STAs on the available frequency-domain units among the m₁ frequency-domain units obtained based on the UORA mechanism, the buffer information of low-latency traffic reported on the available frequency-domain units is carried by a quality of service (QoS) null frame.

97. The method according to any one of claims 71 to 96, further comprising:
receiving, by the AP, a second uplink transmission from the first STA;
wherein the first STA has reserved m₂ frequency-domain units in the second uplink transmission, and the m₂ frequency-domain units are used by the one or more other STAs with pending uplink low-latency traffic to report the buffer information of low-latency traffic, and m₂ is a positive integer.

98. The method according to claim 97, wherein
frequency-domain units in the m₂ frequency-domain units are RUs; or
the frequency-domain units in the m2 frequency-domain units are subchannels.

99. The method according to claim 97 or 98, wherein
frequency-domain units in the m₁ frequency-domain units are the same as frequency-domain units in the m₂ frequency-domain units.

100. The method according to claim 97 or 98, wherein
frequency-domain units in the m₁ frequency-domain units are different from frequency-domain units in the m₂ frequency-domain units.

101. The method according to any one of claims 71 to 100, wherein
one or more of other STAs with more than x pending uplink low-latency traffic report the buffer information of low-latency traffic through an NDP or a QoS null frame, wherein x is 0 or a positive number.

102. The method according to claim 101, wherein
the value of x is specified in a protocol, or the value of x is configured or indicated by the AP in a beacon frame or trigger frame.

103. The method according to claim 101 or 102, wherein in the case where other STAs report the buffer information of low-latency traffic through the NDP, a tone set index or subcarrier set index used in an Ultra-High Reliability Long Training field (UHR-LTF) of the NDP indicates AID information of a STA sending the NDP.

104. The method according to claim 103, wherein the AID information of each STA sending the NDP is associated with one tone set index or one subcarrier set index.

105. The method according to claim 103 or 104, wherein
a bandwidth used by the UHR-LTF of the NDP is one of the following: 20MHz, 40MHz, 80MHz, 80+80MHz, 160MHz, 320MHz; or
a bandwidth used by the UHR-LTF of the NDP is one of the following: 26 tones, 52 tones, 106 tones s.

106. The method according to any one of claims 103 to 105, wherein
each tone set index corresponds to n₁ subcarriers, wherein n₁=4, 5 or 6; or
each subcarrier set index corresponds to n₂ subcarriers, wherein n₂=4, 5 or 6

107. The method according to any one of claims 71 to 106, wherein
for an uplink transmission in which frequency-domain units for reporting the buffer information of low-latency traffic are reserved, a duration of a physical layer protocol data unit (PPDU) carrying uplink data transmitted by the first STA is less than or equal to a predefined value.

108. The method according to claim 107, wherein the predefined value is negatively correlated with the number of frequency-domain units reserved by the first STA for reporting the buffer information of low-latency traffic in the uplink transmission.

109. A station (STA), being a first STA and comprising:
a processing unit, configured to reserve m₁ frequency-domain units in a first uplink transmission, wherein the m₁ frequency-domain units are used by one or more other STAs with pending uplink low-latency traffic to report buffer information of low-latency traffic, and m₁ is a positive integer.

110. A station (STA), being a second STA and comprising:
a communication unit, configured to report buffer information of low-latency traffic on m₁ frequency-domain units;
wherein the m₁ frequency-domain units are frequency-domain units reserved by a first STA in a first uplink transmission, and m₁ is a positive integer.

111. An access point (AP), comprising:
a communication unit, configured to receive a first uplink transmission from a first station (STA);
wherein the first STA has reserved m₁ frequency-domain units in the first uplink transmission, and the m₁ frequency-domain units are used by one or more other STAs with pending uplink low-latency traffic to report buffer information of low-latency traffic, and m₁ is a positive integer.

112. A station (STA), being a first STA and comprising: a processor and a memory, the memory being configured to store a computer program, the processor being configured to invoke and run the computer program stored in the memory, to make the STA perform the method according to any one of claims 1 to 40.

113. A station (STA), being a second STA and comprising: a processor and a memory, the memory being configured to store a computer program, the processor being configured to invoke and run the computer program stored in the memory, to make the STA perform the method according to any one of claims 41 to 70.

114. An access point (AP), comprising a processor and a memory, the memory being configured to store a computer program, the processor being configured to invoke and run the computer program stored in the memory, to make the AP perform the method according to any one of claims 71 to 108.

115. A chip, comprising a processor configured to invoke and run a computer program from a memory, to make a device equipped with the chip perform the method according to any one of claims 1 to 40.

116. A chip, comprising a processor configured to invoke and run a computer program from a memory, to make a device equipped with the chip perform the method according to any one of claims 41 to 70.

117. A chip, comprising a processor configured to invoke and run a computer program from a memory, to make a device equipped with the chip perform the method according to any one of claims 71 to 108.

118. A computer-readable storage medium, configured to store a computer program which, when executed, cause the method according to any one of claims 1 to 40 to be implemented.

119. A computer-readable storage medium, configured to store a computer program which, when executed, cause the method according to any one of claims 41 to 70 to be implemented.

120. A computer-readable storage medium, configured to store a computer program which, when executed, cause the method according to any one of claims 71 to 108 to be implemented.

121. A computer program product, comprising computer program instructions which, when executed, cause the method according to any one of claims 1 to 40 to be implemented.

122. A computer program product, comprising computer program instructions which, when executed, cause the method according to any one of claims 41 to 70 to be implemented.

123. A computer program product, comprising computer program instructions which, when executed, cause the method according to any one of claims 71 to 108 to be implemented.

124. A computer program, when executed, cause the method according to any one of claims 1 to 40 to be implemented.

125. A computer program, when executed, cause the method according to any one of claims 41 to 70 to be implemented.

126. A computer program, when executed, cause the method according to any one of claims 71 to 108 to be implemented.
